# EUROPEAN PATENT SPECIFICATION

(11) **EP 1 815 138 B1**
(45) Date of publication and mention of the grant of the patent: **22.04.2009**
(21) Application number: 06833435.8
(22) Date of filing: 21.11.2006
(51) Int. Cl.: F04B 27/10, F04B 39/00, F04B 39/02, F16C 19/10, F16C 23/08, F16C 35/06

(54) **HERMETIC COMPRESSOR**
HERMETISCHER VERDICHTER
COMPRESSEUR HERMETIQUE

(30) Priority: 22.11.2005 JP 2005336560; 01.09.2006 JP 2006237235
(43) Date of publication of application: 08.08.2007
(73) Proprietor: Panasonic Corporation, Kadoma-shi Osaka 571-8501 (JP)
(72) Inventor: KAKIUCHI, Takashi c/o Matsushita Electric Ind. Co., Ltd, Shiromi 1-chome, Chuo-ku, Osaka-shi Osaka 540-6319 (JP); WATANABE, Kiwamu c/o Matsushita Electric Ind. Co., Ltd, Shiromi 1-chome, Chuo-ku, Osaka-shi Osaka 540-6319 (JP)
(74) Representative: Grünecker, Kinkeldey, Stockmair & Schwanhäusser Anwaltssozietät
(86) International application number: PCT/JP2006/323631
(87) International publication number: WO 2007/061103

(56) References cited:
- WO-A-03/019008
- GB-A- 2 161 865
- US-A- 1 435 167
- US-A- 4 357 058
- US-A1- 2005 089 416

## Description

### Technical Field

The present invention relates to a hermetic compressor mainly used for a refrigerator for domestic use.

### Background Art

In a conventional hermetic compressor in which a thrust ball bearing is employed for enhancing the efficiency, washers arranged on the upper and lower sides of the thrust ball bearing can be freely rotated round the shaft and the bearing. This prior art is disclosed, for example, in the official gazette of Japanese Patent Unexamined Publication No. 61-53474.

Referring to the drawings, the above conventional hermetic compressor will be explained bellow.

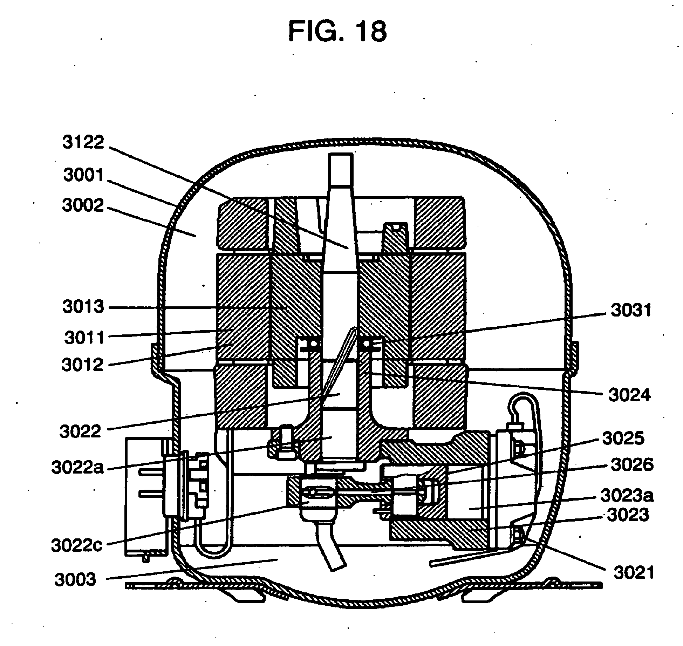

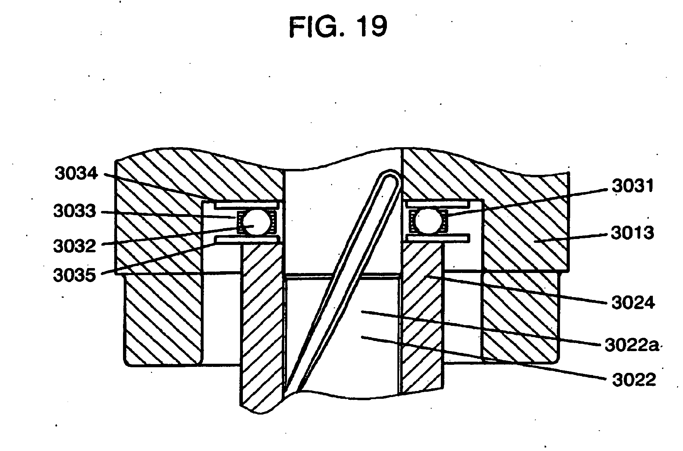

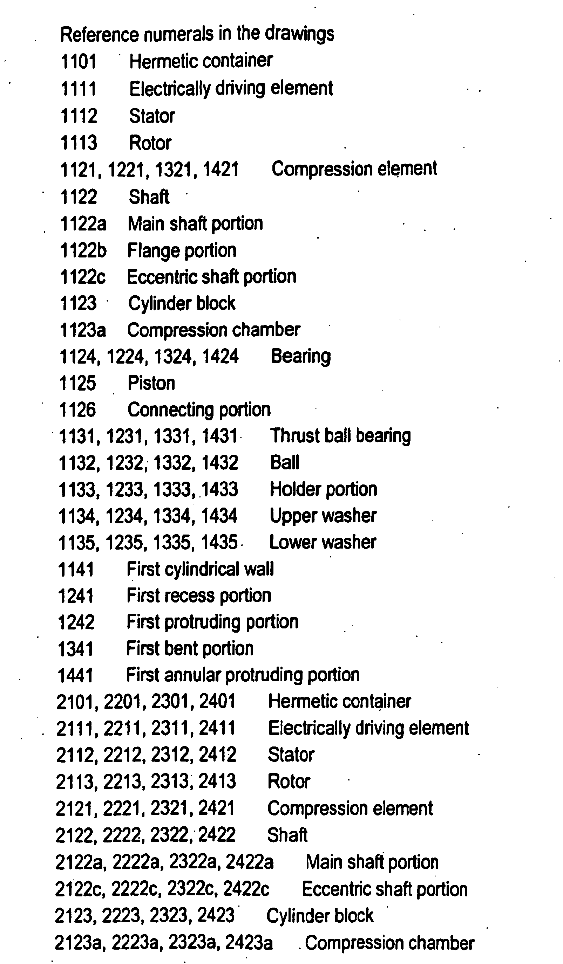

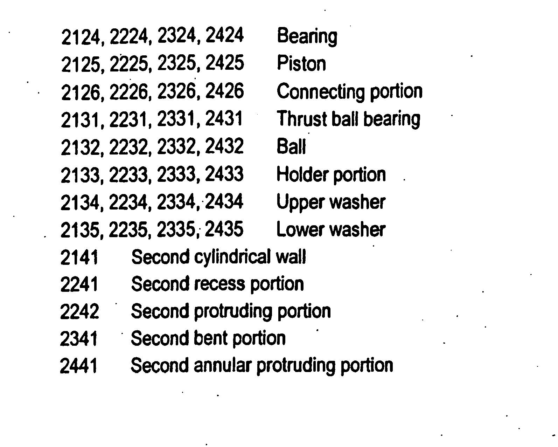

Fig. 18 is a longitudinal sectional view of the conventional hermetic compressor and Fig. 19 is an enlarged sectional view showing a primary portion of the conventional hermetic compressor.

In Figs. 18 and 19, refrigerant 3002 is charged into hermetic container 3001. Further, refrigerating machine oil 3003 is stored in hermetic container 3001.

Electrically driving element 3011 includes: stator 3012 connected to an external electric power source (not shown); and rotor 3013 arranged inside stator 3012, forming a predetermined gap between rotor 3013 an stator 3012.

Compression element 3021 includes: shaft 3022; cylinder block 3023; bearing 3024; piston 3025 reciprocating in compression chamber 3023a; connecting portion 3026; and thrust ball bearing 3031. Shaft 3022 includes: main shaft portion 3022a; and eccentric shaft portion 3022c. Cylinder block 3023 is fixed under stator 3012 and forms compression chamber 3023a. Bearing 3024 supports shaft 3022 provided in cylinder block 3023. Piston 3025 is reciprocated in compression chamber 3023a. Connecting portion 3026 connects piston 3025witheccentric shaft portion 3022c. Thrust ball bearing 3031 is arranged between rotor 3013 and an upper end face of bearing 3024. Compression element 3021 composes a reciprocating type compression mechanism.

Thrust ball bearing 3031 includes: a plurality of balls 3032; holder portion 3033 to hold balls 3032; upper washer 3034 arranged above balls 3032; and lower washer 3035 arranged below balls 3032.

Operation of the hermetic compressor composed as described above will be explained as follows.

When stator 3012 is energized by an external electric power source, rotor 3013 is rotated together with shaft 3022. Due to the foregoing, an eccentric motion is conducted by eccentric shaft portion 3022c. Therefore, eccentric shaft portion 3022c reciprocates piston 3025 through connecting portion 3026 in compression chamber 3023a. Accordingly, a predetermined compressive motion to compress suction gas is conducted.

Thrust ball bearing 3031 supports a vertical load generated by the dead weights of rotor 3013 and shaft 3022. Therefore, it is possible to reduce a frictional force generated between rotor 3013 and bearing 3024. Accordingly, an intensity of electric power to be inputted into the hermetic compressor can be decreased and the efficiency can be enhanced.

However, in the above conventional structure, in order to make it easy to assemble the components, thrust ball bearing 3031 is only put on an upper end face of bearing 3024, that is, thrust ball bearing 3031 is arranged without being fixed. Accordingly, there is a possibility that lower washer 3035 is arranged being shifted at the time of assembling. Further, there is a possibility that lower washer 3035 is shifted by a shock while the device is being conveyed and an inner diameter of lower washer 3035 comes into contact with an outer diameter of main shaft portion 3022 which is being rotated.

Concerning lower washer 3035, since a lower face of lower washer 3035 is closely contacted with an upper end face of bearing 3024 through viscosity of refrigerating machine oil 3003, lower washer 3035 is not rotated together with balls 3032 and holder portion 3033. Therefore, when an inner diameter of lower washer 3035 comes into contact with an outer diameter of main shaft portion 3022a which is rotating, abrasion powder is generated. The thus generated abrasion powder spreads to each sliding portion of the hermetic compressor and causes abrasion.

WO 03/019008 discloses an axial bearing arrangement for a hermetic compressor, wherein the radial bearing hub incorporates an upper tubular extension, bearing a corresponding extension of the crankshaft, and around which is mounted an axial rolling bearing for supporting the weight of the crankshaft-rotor assembly. Movement of an annular race used as an upper washer is restricted in order to maintain a minimal clearance between the annular race and the tubular extension of the crankshaft.

### Disclosure of the Invention

A hermetic compressor comprises:
an electrically driving element having stator and a rotor, the electrically driving element being accommodated in a hermetic container; and
a compression element driven by the electrically driving element, the compression element being accommodated in the hermetic container,
the compression element comprising:
   a shaft;
   a cylinder block forming a compression chamber;
   a bearing for supporting the shaft, arranged in the cylinder block;
   a piston reciprocated in the compression chamber;
   a connecting portion for connecting the piston with an eccentric shaft portion; and
   a thrust ball bearing,
the thrust ball bearing comprising:
   a plurality of balls;
   a holder portion for holding the balls;
   an upper washer arranged above the balls; and
   a lower washer arranged below the balls,
the hermetic compressor further comprising a regulation mechanism for regulating the lower washer so that a moveable distance in the thrust direction of the lower washer can be shorter than clearance formed between an inner diameter of the lower washer and an outer diameter of the main shaft portion.

### Brief Description of the Drawings

Fig. 1 is a longitudinal sectional view of a hermetic compressor of Embodiment 1 of the present invention.
Fig. 2 is an enlarged sectional view showing a primary portion of the hermetic compressor of Embodiment 1 of the present invention.
Fig. 3 is a longitudinal sectional view of a hermetic compressor of Embodiment 2 of the present invention.
Fig. 4 is an enlarged sectional view showing a primary portion of the hermetic compressor of Embodiment 2 of the present invention.
Fig. 5 is a longitudinal sectional view of a hermetic compressor of Embodiment 3 of the present invention.
Fig. 6 is an enlarged sectional view showing a primary portion of the hermetic compressor of Embodiment 3 of the present invention.
Fig. 7 is a view showing an example of Embodiment 3 of the present invention.
Fig. 8 is a longitudinal sectional view of a hermetic compressor of Embodiment 4 of the present invention.
Fig. 9 is an enlarged sectional view showing a primary portion of the hermetic compressor of Embodiment 4 of the present invention.
Fig. 10 is a longitudinal sectional view of a hermetic compressor of Embodiment 5 of the present invention.
Fig. 11 is an enlarged sectional view showing a primary portion of the hermetic compressor of Embodiment 5 of the present invention.
Fig. 12 is a longitudinal sectional view of a hermetic compressor of Embodiment 6 of the present invention.
Fig. 13 is an enlarged sectional view showing a primary portion of the hermetic compressor of Embodiment 6 of the present invention.
Fig. 14 is a longitudinal sectional view of a hermetic compressor of Embodiment 7 of the present invention.
Fig. 15 is an enlarged sectional view showing a primary portion of the hermetic compressor of Embodiment 7 of the present invention.
Fig. 16 is a longitudinal sectional view of a hermetic compressor of Embodiment 8 of the present invention.
Fig. 17 is an enlarged sectional view showing a primary portion of the hermetic compressor of Embodiment 8 of the present invention.
Fig. 18 is a longitudinal sectional view showing a conventional hermetic compressor.
Fig. 19 is an enlarged sectional view showing a primary portion of the conventional hermetic compressor.

### Detailed Description of the Preferred Embodiments

The present invention has been accomplished to solve the above problems. An object of the present invention is to provide a highly reliable hermetic compressor.

In order to solve the above conventional problems, a hermetic compressor of the present invention includes a regulation means, which is arranged between a lower washer and an upper end face of a bearing, for regulating the lower washer so that a movable distance in the thrust direction of the lower washer can be shorter than clearance between an inner diameter of the lower washer and an outer diameter of a main shaft portion. Due to the above structure, the inner diameter of the lower washer can be prevented from coming into contact with the outer diameter of the main shaft portion. Therefore, the generation of abrasion powder can be prevented.

In the hermetic compressor of the present invention, the generation of abrasion powder can be prevented. Therefore, it is possible to provide a highly reliable hermetic compressor.

Referring to the drawings, embodiments of the present invention will be explained below. In this connection, it should be noted that the present invention is not limited to this specific embodiment.

### (Embodiment 1)

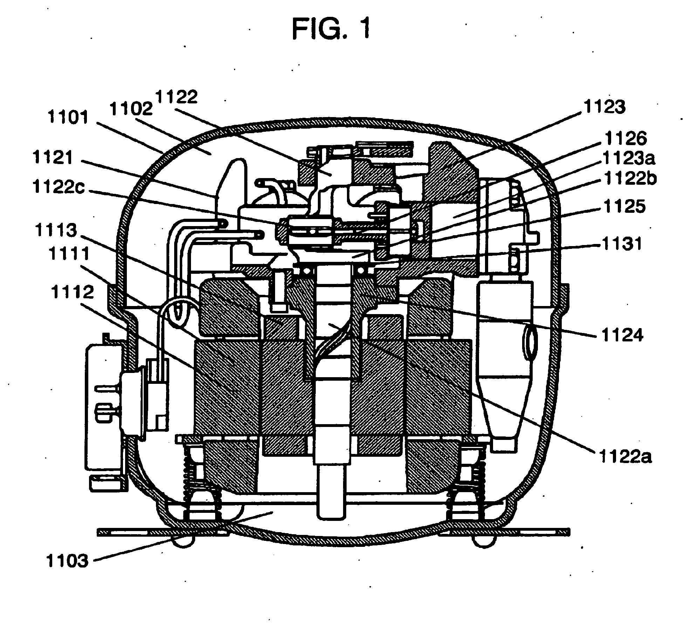

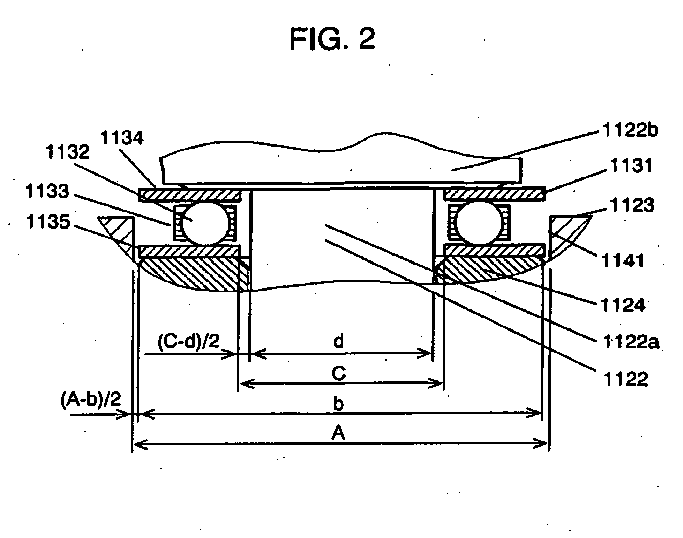

Fig. 1 is a longitudinal sectional view of a hermetic compressor of Embodiment 1 of the present invention. Fig. 2 is an enlarged sectional view showing a primary portion of the hermetic compressor of Embodiment 1 of the present invention.

In Figs. 1 and 2, refrigerant 1102 is charged into hermetic container 1101. Further, refrigerating machine oil 1103 is stored in hermetic container 1101. In this case, refrigerant 1102 is R600a which is a hydrocarbon refrigerant. Refrigerating machine oil 1103 is an oil, which is compatible with refrigerant 1102 , such as synthetic fluid, mineral oil or polyol ester oil.

Electric driving element 1111 includes: stator 1112 connected to an external electric power source (not shown) ; and rotor 1113 arranged, forming a predetermined gap between rotor 1113 and stator 1112.

Compression element 1121 includes: shaft 1122; cylinder block 1123; bearing 1124; piston 1125; connecting portion 1126; and thrust ball bearing 1131. Shaft 1122 includes: main shaft portion 1122a, the outer diameter of which is d; and eccentric shaft portion 1122c formed out of main shaft portion 1122a through flange portion 1122b. Cylinder block 1123 composes compression chamber 1123a. Bearing 1124 supports shaft 1122 provided in cylinder block 1123. Piston 1125 reciprocates in compression chamber 1123a. Connecting portion 1126 connects piston 1125 with eccentric shaft portion 1122c. Thrust ball bearing 1131 is arranged between flange portion 1122b and an upper end face of bearing 1124. Compression element 1121 composes a reciprocating type compression mechanism.

Rotor 1113 is engaged with main shaft portion 1122a of the shaft. Stator 1112 is arranged and fixed in a lower portion of cylinder block 1123.

Thrust ball bearing 1131 includes: a plurality of balls 1132; holder portion 1133 for holding balls 1132; upper washer 1134 arranged above balls 1132; and lower washer 1135, the outer diameter of which is b and the inner diameter of which is C, arranged below balls 1132. In cylinder block 1123, at a height in which lower washer 1135 is arranged, first cylindrical wall 1141, the inner diameter of which is A, surrounding the outside of lower washer 1135, is arranged. It is composed so that clearance (A - b)/2 between outer diameter b of lower washer 1135 and inner diameter A of first cylinder wall 1141 can be smaller than clearance (C - d)/2 between inner diameter C of lower washer 1135 and outer diameter d of main shaft portion 1122a.

Operation and action of the hermetic compressor composed as described above will be explained below.

When stator 1112 is energized by an external electric power source (not shown), rotor 1113 is rotated together with shaft 1122. Due to the foregoing, an eccentric motion is conducted by eccentric shaft portion 1122c. Therefore, eccentric shaft portion 1122c reciprocates piston 1125 through connecting portion 1126 in compression chamber 1123a. Accordingly, a predetermined compressive motion to compress suction gas is conducted.

At this time, balls 1132 of thrust ball bearing 1131 support a vertical load generated by the dead weights of rotor 1113 and shaft 1122. An upper surface of upper washer 1134 is closely contacted with a lower surface of flange portion 1122b of shaft 1122 through viscosity of refrigerating machine oil 1103. Therefore, when shaft 1122 is rotated, upper washer 1134 is rotated synchronously with shaft 1122. On the other hand, a lower surface of lower washer 1135 is also closely contacted with an upper end portion of bearing 1124 through viscosity of refrigerating machine oil 1103. Therefore, lower washer 1135 is not rotated. Since slippage is generated between rotating balls 1132 and lower washer 1135, balls 1132 and holder portion 1133 are rotated being delayed without following a rotation of shaft 1122. In general, the coefficient of rolling friction is 10 to 20 times as low as the coefficient of sliding friction. Further, no metal contact is caused in the rolling bearing. Therefore, it is possible to conduct a stable motion by the rolling bearing.

In this structure, clearance (A - b)/2 between outer diameter b of lower washer 1135 and inner diameter A of first cylinder wall 1141 is smaller than clearance (C - d) / 2 between inner diameter C of lower washer 1135 and outer diameter d of main shaft portion 1122a. Accordingly, before lowerwasher 1135 comes into contact with main shaft portion 1122a, an outer diameter of lower washer 1135 and an inner diameter of cylindrical wall 1141 are contacted with each other. That is, by first cylindrical wall 1141 surrounding the outside of lower washer 1135, the inner diameter of lower washer 1135 is arranged at a position where the inner diameter of lower washer 1135 does not come into contact with the outer diameter of main shaft portion 1122a.

When first cylindrical wall 1141 surrounding the outside of lower washer 1135 is provided in cylinder block 1123 or bearing 1124 as described above, a regulation mechanism is formed.

Consequently, according to the present embodiment, the inner diameter of lower washer 1135 can be prevented from coming into contact with the outer diameter of main shaft portion 1122a by this regulation mechanism. Accordingly, there is no possibility that lower washer 1135 damages main shaft portion 1122a and generates abrasion powder. Therefor, it is possible to realize a highly reliable hermetic compressor.

Since first cylindrical wall 1141 can be manufactured simultaneously when cylinder block 1123 or bearing 1124 is machined, it is unnecessary to add a new component. Therefore, the productivity can be enhanced.

Further, since thrust ball bearing 1131 can be incorporated into the device only when it is accommodated in first cylindrical wall 1141 with shaft 1122 being inserted into the thrust ball bearing at the time of assembling, it is unnecessary to use a special assembling method such as a method of press-fitting lower washer 1135. Accordingly, the working property can be enhanced at the time of assembling.

In this connection, in the present embodiment, first cylindrical wall 1141 is integrated with cylinder block 1123 into one body. However, of course, it is possible to provide the same effect even when first cylindrical wall 1141 is integrated with bearing 1124 into one body.

### (Embodiment 2) .

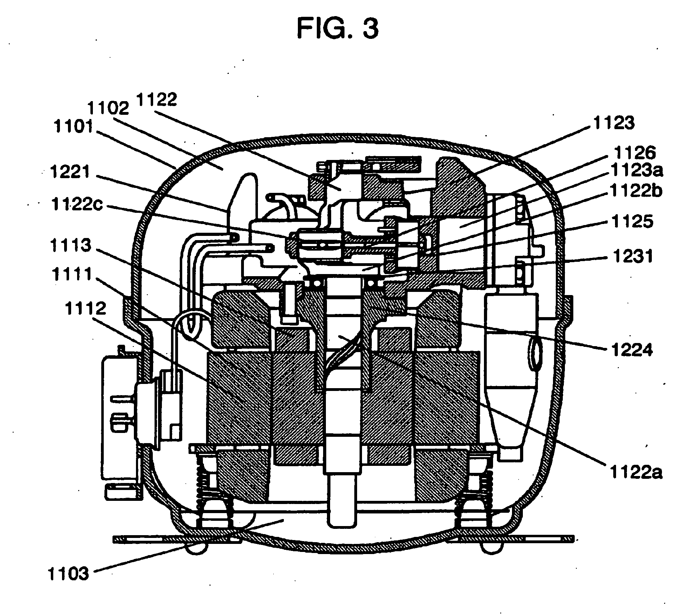

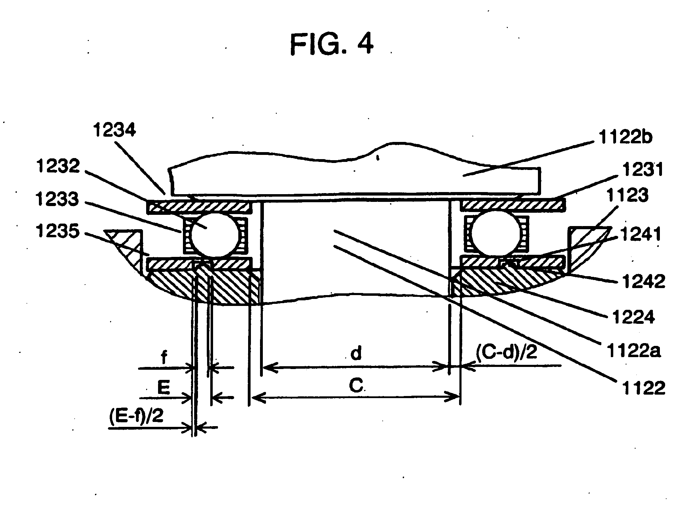

Fig. 3 is a longitudinal sectional view of a hermetic compressor of Embodiment 2 of the present invention. Fig. 4 is an enlarged sectional view showing a primary portion of the hermetic compressor of Embodiment 2 of the present invention.

Like reference characters are used to indicate like parts in Embodiments 1 and 2.

In Figs. 3 and 4, refrigerant 1102 is charged into hermetic container 1101. Further, refrigerating machine oil 1103 is stored in hermetic container 1101. In this case, refrigerant 1102 is R600a which is a hydrocarbon refrigerant. Refrigerating machine oil 1103 is an oil, which is compatible with refrigerant 1102, such as synthetic fluid, mineral oil or polyol ester oil.

Electric driving element 1111 includes: stator 1112 connected to an external electric power source (not shown) ; and rotor 1113 arranged, forming a predetermined gap between rotor 1113 and stator 1112.

Compression element 1221 includes: shaft 1122; cylinder block 1123; bearing 1224; piston 1125; connecting portion 1126; and thrust ball bearing 1231. Shaft 1122 includes: main shaft portion 1122a, the outer diameter of which is d; and eccentric shaft portion 1122c formed out of main shaft portion 1122a through flange portion 1122b. Cylinder block 1123 is fixed in a portion above stator 1112 and composes compression chamber 1123a. Bearing 1224 supports shaft 1122 provided in cylinder block 1123. Piston 1125 reciprocates in compression chamber 1123a. Connectingportion 1126 connectspiston 1125 with eccentric shaft portion 1122c. Thrust ball bearing 1231 is arranged between flange portion 1122b and an upper end face of bearing 1224. Compression element 1221 composes a reciprocating type compression mechanism.

Rotor 1113 is engaged with main shaft portion 1122a of the shaft. Stator 1112 is arranged and fixed in a lower portion of cylinder block 1123.

Thrust ball bearing 1231 includes: a plurality of balls 1232; holder portion 1233 for holding balls 1232; upper washer 1234 arranged above balls 1232; and lower washer 1235, the outer diameter of which is b and the inner diameter of which is C. arranged below the balls 1232. On lower washer 1235, first recess portion 1241 is provided. On an upper end face of bearing 1224, first protruding portion 1242 is provided. First recess portion 1241 and first protruding portion 1242 are idly engaged with each other. It is composed so that Clearance (B - f) /2 in the thrust direction between width E in the thrust direction of first recess portion 1241 and width f in the thrust direction of first protruding portion 1242 can be smaller than clearance (C - d)/2 between inner diameter C of lower washer 1235 and outer diameter d of main shaft portion 1122a.

Operation and action of the hermetic compressor composed as described above will be explained below.

When stator 1112 is energized by an external electric power source (not shown), rotor 1113 is rotated together with shaft 1122. Due to the foregoing, an eccentric motion is conducted by eccentric shaft portion 1122c. Therefore, eccentric shaft potion 1122c reciprocates piston 1125 through connecting portion 1126 in compression chamber 1123a. Accordingly, a predetermined compressive motion to compress suction gas is conducted.

At this time, balls 1232 of thrust ball bearing 1231 support a vertical load generated by the dead weights of rotor 1113 and shaft 1122. An upper surface of upper washer 1234 is closely contacted with a lower surface of flange portion 1122b of shaft 1122 through viscosity of refrigerating machine oil 1103. Therefore, when shaft 1122 is rotated, upper washer 1234 is rotated synchronously with shaft 1122. On the other hand, a lower surface of lower washer 1235 is also closely contacted with an upper end portion of bearing 1224 through viscosity of refrigerating machine oil 1103. Therefore, lower washer 1235 is not rotated. Slippage is generated between rotating balls 1232 and lower washer 1235. Therefore, balls 1232 and holder portion 1233 are rotated being delayed without following a rotation of shaft 1122. In general, the coefficient of rolling friction is 10 to 20 times as low as the coefficient of sliding friction. Further, no metal contact is caused in the rolling bearing. Therefore, it is possible to conduct a stable motion by the rolling bearing.

Clearance (E - f) /2 in the thrust direction between width E in the thrust direction of first recess portion 1241 and width f in the thrust direction of first protruding portion 1242 is smaller than clearance (C - d)/2 between inner diameter C of lower washer 1235 and outer diameter d of main shaft portion 1122a. Therefore, before lower washer 1235 comes into contact with main shaft portion 1122a, an end face of first recess portion 1241 and an end face of first protruding portion 1242 come into contact with each other. That is, by first recess portion 1241 and first protruding portion 1242, the inner diameter of lower washer 1235 is surely arranged at a position where it can not be contacted with the outer diameter of rotating main shaft portion 1122a. Therefore, according to the present embodiment, there is no possibility that the inner diameter of lower washer 1235 comes into contact with the outer diameter of main shaft portion 1122a.

As described above, on lower washer 1235, first recess portion 1241 is provided. On the upper end face of bearing 1224, first protruding portion 1242 is provided. First recess portion 1241 and first protruding portion 1242 are idly engaged with each other. In this way, a regulation mechanism is formed.

According to the present embodiment, by this regulation mechanism, the inner diameter of lower washer 1235 can be prevented from coming into contact with the outer diameter of main shaft portion 1122a. Accordingly, there is no possibility that lower washer 1235 damages main shaft portion 1122a and generates abrasion powder. Therefore, it is possible to realize a highly reliable hermetic compressor.

First recess portion 1241 can be formed, for example, simultaneously when lower washer 1235 is formed by means of press forming. First protruding portion 1242 can be formed, for example, simultaneously when bearing 1242 is molded by means of die-cast molding. Therefore, it is unnecessary to add a manufacturing step. Accordingly, it is possible to enhance the productivity of producing a hermetic compressor.

Since thrust ball bearing 1231 can be incorporated into the device only when shaft 1122 is inserted into the thrust ball bearing and first recess portion 1241 and first protruding portion 1242 are idly engaged with each other at the time of assembling, it is unnecessary to use a special assembling method such as a method of press-fitting lower washer 1135. Accordingly, the working property of assembling can be enhanced.

In the present embodiment, first recess portion 1241 is a hollow portion which does not penetrate lower washer 1235. However, as long as first protruding portion 1242 does not exceed the wall thickness of lower washer 1235 and first recess portion 1241 is out of the rotary locus of balls 1232 controlled by holder portion 1233, of course, first recess portion 1241 can provide the same operational effect as that of a hole penetrating lower washer 1235.

In the present embodiment, first recess portion 1241 is a hollow portion not penetrating lower washer 1235. However, as long as first protruding portion 1242 is out of the rotary locus of balls 1232 controlled by holder portion 1233 and first protruding portion 1242 is arranged in a range in which first protruding portion 1242 can not obstruct rotating balls 1232, of course, the same operational effect can be provided even when first recess portion 1241 is a hole penetrating lower washer 1235 and first protruding portion 1242 exceeds the wall thickness of lower washer 1235.

### (Embodiment 3)

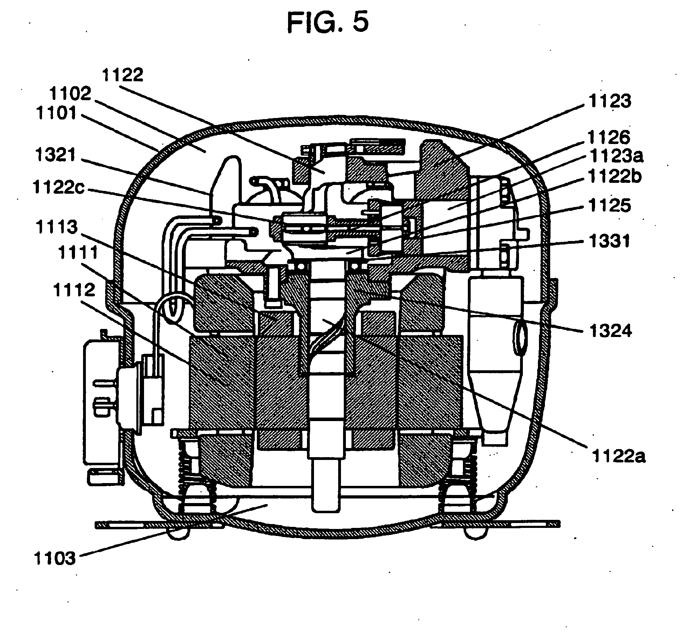

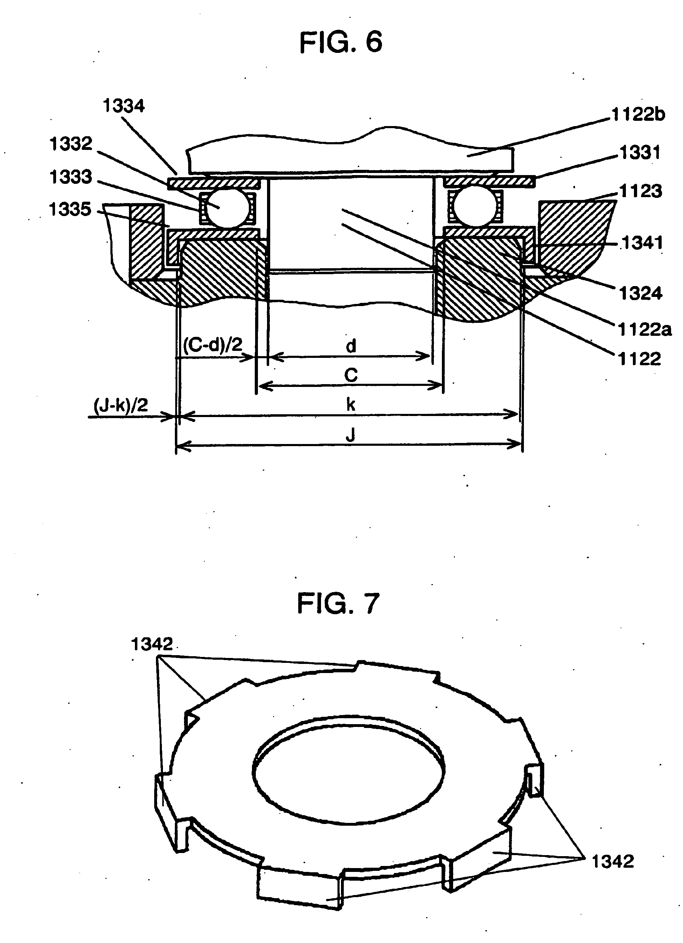

Fig. 5 is a longitudinal sectional view of a hermetic compressor of Embodiment 3 of the present invention. Fig. 6 is an enlarged sectional view showing a primary portion of the hermetic compressor of Embodiment 3 of the present invention. Fig. 7 is a view showing an example of Embodiment 3 of the present invention.

Like reference characters are used to indicate like parts in Embodiments 1 and 3.

In Figs. 5 and 6, refrigerant 1102 is charged into hermetic container 1101. Further, refrigerating machine oil 1103 is stored in hermetic container 1101. In this case, refrigerant 1102 is R600a which is a hydrocarbon refrigerant. Refrigerating machine oil 1103 is an oil, which is compatible with refrigerant 1102, such as synthetic fluid, mineral oil or polyol ester oil.

Electric driving element 1111 includes: stator 1112 connected to an external electric power source (not shown) ; and rotor 1113 arranged, forming a predetermined gap between rotor 1113 and stator 1112.

Compression element 1321 includes: shaft 1122; cylinder block 1123; bearing 1324; piston 1125; connecting portion 1126; and thrust ball bearing 1331. Shaft 1122 includes: main shaft portion 1122a, the outer diameter of which is d; and eccentric shaft portion 1122c formed out of main shaft portion 1122a through flange portion 1122b. Cylinder block 1123 is fixed in a portion above stator 1112 and composes compression chamber 1123a. Bearing 1324 supports shaft 1122 provided in cylinder block 1123. Piston 1125 reciprocates in compression chamber 1123a. Connecting portion 1126 connects piston 1125 with eccentric shaft portion 1122c. Thrust ball bearing 1331 is arranged between flange portion 1122b and an upper end face of bearing 1124. Compression element 1321 composes a reciprocating type compression mechanism.

Rotor 1113 is engaged with main shaft portion 1122a of the shaft. Stator 1112 is arranged and fixed in a lower portion of cylinder block 1123.

Thrust ball bearing 1331 includes: a plurality of balls 1332; holder portion 1333 for holding balls 1332; upper washer 1334 arranged above balls 1332; and lower washer 1335, the outer diameter of which is b and the inner diameter of which is C, arranged below balls 1332. On an outer circumference of lower washer 1335, first bent portion 1341 is formed. It is composed so that clearance (J - k)/2 in the thrust direction between inner circumferential diameter J of first bent portion 1341 and outer diameter k of bearing 1324 can be smaller than clearance (C - d)/2 between inner diameter C of lower washer 1335 and outer diameter d of main shaft portion 1122a.

Operation and action of the hermetic compressor composed as described above will be explained below.

When stator 1112 is energized by an external electric power source (not shown), rotor 1113 is rotated together with shaft 1122. Due to the foregoing, an eccentric motion is conducted by eccentric shaft portion 1122c. Therefore, eccentric shaft portion 1122c reciprocates piston 1125 through connecting portion 1126 in compression chamber 1123a. Accordingly, a predetermined compressive motion to compress suction gas is conducted.

At this time, balls 1332 of thrust ball bearing 1331 support a vertical load generated by the dead weights of rotor 1113 and shaft 1122. An upper surface of upper washer 1334 is closely contacted with a lower surface of flange portion 1122b of shaft 1122 through viscosity of refrigerating machine oil 1103. Therefore, when shaft 1122 is rotated, upper washer 1334 is rotated synchronously with shaft 1122. On the other hand, a lower surface of lower washer 1335 is also closely contacted with an upper end portion of bearing 1324 through viscosity of refrigerating machine oil 1103. Therefore, lower washer 1335 is not rotated. Since slippage is generated between rotating balls 1332 and lower washer 1335. Therefore, balls 1332 and holder portion 1333 are rotated being delayed without following a rotation of shaft 1122. In general, the coefficient of rolling friction is 10 to 20 times as low as the coefficient, of sliding friction. Further, no metal contact is caused in the rolling bearing. Therefore, it is possible to conduct a stable motion by the rolling bearing.

It is composed so that clearance (J- k)/2 in the thrust direction between inner circumferential diameter J of first bent portion 1341 and outer diameter k of bearing 1324 can be smaller than clearance (C - d) /2 between inner diameter C of lower washer 1335 and outer diameter d of main shaft portion 1122a. Accordingly, before lower washer 1135 comes into contact with main shaft portion 1122a, the inner circumferential diameter of first bent portion 1341 and the outer diameter of bearing 1324 come into contact with each other. That is, by first bent portion 1341, lower washer 1335 is surely arranged at a position where the inner diameter of lower washer 1335 does not come into contact with the outer diameter of rotating main shaft portion 1122a.

When first bent portion 1341 or raised portions 1342 is provided on the outer circumference of lower washer 1335 as described above, a regulation mechanism is composed.

Therefore, according to the present embodiment, the inner diameter of lower washer 1335 can be prevented from coming into contact with the outer diameter of main shaft portion 1122a by this regulation mechanism. Accordingly, there is no possibility that main shaft portion 1122a is damaged by lower washer 1335 and abrasion powder is generated. Therefore, it is possible to realize a highly reliable hermetic compressor.

First bent portion 1341 can be formed, for example, simultaneously when lower washer 1335 is formed by means of press forming. Therefore, it is unnecessary to add a manufacturing step and it is possible to enhance the productivity of a hermetic compressor.

Concerning thrust ball bearing 1331, only when shaft 1122 is inserted into thrust ball bearing 1331 and first bent portion 1341 is idly engaged with bearing 1324 at the time of assembling, it is possible to incorporate thrust ball bearing 1331. That is, it is unnecessary to use a special assembling method such as press-fitting lower washer 1335. Accordingly, the property of assembling work can be enhanced.

In this connection, in the present embodiment, first bent portion 1341 is formed into a shape in which an overall circumference of lower washer 1335 is subjected to extrusion. However, of course, the same operational effect can be provided when three or more raised portions 1342 are provided on the outer circumference of lower washer 1335 as shown in Fig. 7.

### (Embodiment 4)

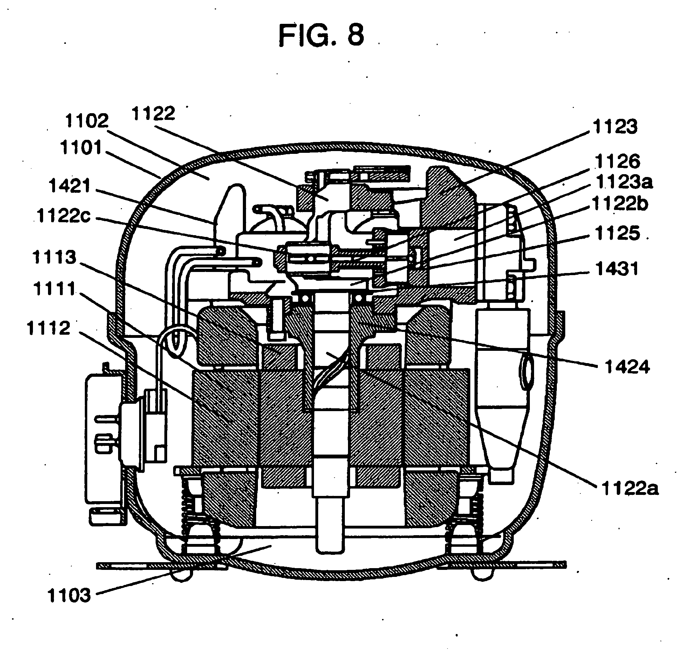

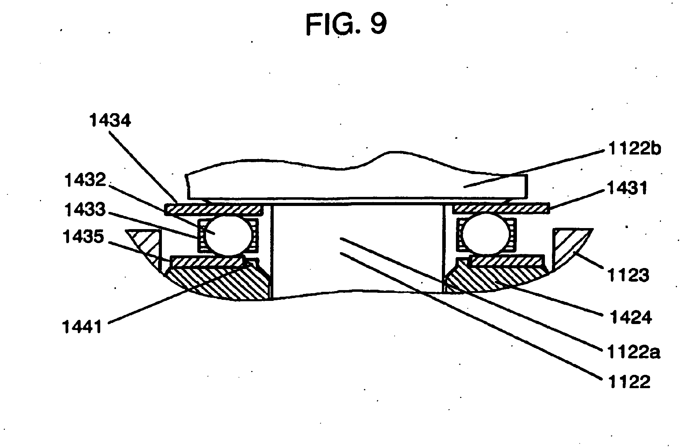

Fig. 8 is a longitudinal sectional view of a hermetic compressor of Embodiment 4 of the present invention. Fig. 9 is an enlarged sectional view showing a primary portion of the hermetic compressor of Embodiment 4 of the present invention.

In this connection, like reference characters are used to indicate like parts in Embodiments 1 and 4.

In Figs. 8 and 9, refrigerant 1102 is charged into hermetic container 1101. Further, refrigerating machine oil 1103 is stored in hermetic container 1101. In this case, refrigerant 1102 is R600a which is a hydrocarbon refrigerant. Refrigerating machine oil 1103 is an oil, which is compatible with refrigerant 1102, such as synthetic fluid, mineral oil or polyol ester oil.

Electric driving element 1111 includes: stator 1112 connected to an external electric power source (not shown) ; and rotor 1113 arranged, forming a predetermined gap between rotor 1113 and stator 1112.

Compression element 1421 includes: shaft 1122; cylinder block 1123; bearing 1424; piston 1125; connecting portion 1126; and thrust ball bearing 1431. Shaft 1122 includes: main shaft portion 1122a; and eccentric shaft portion 1122c formed out of main shaft portion 1122a through flange portion 1122b. Cylinder block 1123 is fixed in a portion above stator 1112 and composes compression chamber 1123a. Bearing 1424 supports shaft 1122 provided in cylinder block 1123. Piston 1125 reciprocates in compression chamber 1123a. Connecting portion 1126 connects piston 1125 with eccentric shaft portion 1122c. Thrust ball bearing 1431 is arranged between flange portion 1122b and an upper end face of bearing 1424. Compression element 1421 composes a reciprocating type compression mechanism.

Rotor 1113 is engaged with main shaft portion 1122a of the shaft. Stator 1112 is arranged and fixed in a lower portion of cylinder block 1123.

Thrust ball bearing 1431 includes: a plurality of balls 1432; holder portion 1433 for holding balls 1432; upper washer 1434 arranged above balls 1432; and lower washer 1435, arranged below balls 1432. In bearing 1424, at the height in which lower washer 1435 is arranged, first annular protruding portion 1441, which is surrounded by the inside of the lower washer, is provided. Therefore, under the condition that the lower surface of lower washer 1435 is closely contacted with an upper end face of bearing 1424, an inner diameter of lower washer 1435 can not be moved inside from first annular protruding portion 1441.

Operation and action of the hermetic compressor composed as described above will be explained below.

When stator 1112 is energized by an external electric power source (not shown), rotor 1113 is rotated together with shaft 1122. Due to the foregoing, an eccentric motion is conducted by eccentric shaft portion 1122c. Therefore, eccentric shaft portion 1122c reciprocates piston 1125 through connecting portion 1126 in compression chamber 1123a. Accordingly, a predetermined compressive motion to compress suction gas is conducted.

At this time, balls 1432 of thrust ball bearing 1431 support a vertical load generated by the dead weights of rotor 1113 and shaft 1122. An upper surface of upper washer 1434 is closely contacted with a lower surface of flange portion 1122b of shaft 1122 through viscosity of refrigerating machine oil 1103. Therefore, when shaft 1122 is rotated, upper washer 1434 is rotated synchronously with shaft 1122. On the other hand, a lower surface of lower washer 1435 is also closely contacted with an upper end portion of bearing 1424 through viscosity of refrigerating machine oil 1103. Therefore, lower washer 1435 is not rotated. Slippage is generated between rotating balls 1432 and lower washer 1435. Therefore, balls 1432 and holder portion 1433 are rotated being delayed without following a rotation of shaft 1122. In general, the coefficient of rolling friction is 10 to 20 times as low as the coefficient of sliding friction. Further, no metal contact is caused in the rolling bearing. Therefore, it is possible to conduct a stable motion by the rolling bearing.

Since first annular protruding portion 1441 exists between an inner diameter of lower washer 1435 and an outer diameter of main shaft portion 1122a, the inner diameter of lower washer 1435 comes into contact with first annular protruding portion 1441 before it comes into contact with the outer diameter of main shaft portion 1122a. That is, by first annular protruding portion 1441, the inner diameter of lower washer 1435 is surely arranged at a position where the inner diameter of lower washer 1435 does not come into contact with the outer diameter of rotating main shaft portion 1122a.

As described above, a regulation mechanism is composed when first annular protruding portion 1441 is provided inside the upper end face of bearing 1424.

Therefore, according to the present embodiment, the inner diameter of lower washer 1435 can be prevented from coming into contact with the outer diameter of main shaft portion 1122a by this regulation mechanism. Accordingly, there is no possibility that main shaft portion 1122a is damaged by lower washer 1435 and abrasion powder is generated. Therefore, it is possible to realize a highly reliable hermetic compressor.

First annular protruding portion 1441 can be formed, for example, simultaneously when bearing 1424 is molded by means of die-cast molding. Therefore, it is unnecessary to add a manufacturing step. Accordingly, it is possible to enhance the productivity of producing a hermetic compressor.

Since thrust ball bearing 1431 can be incorporated into the device only when shaft 1122 is inserted into the thrust ball bearing and the inner diameter of lower washer 1435 is idly engaged with the outer diameter of first annular protruding portion 1441, it is unnecessary to use a special assembling method such as a method of press-fitting lower washer 1435. Accordingly, the working property can be enhanced at the time of assembling.

In this connection, in the present embodiment, first annular protruding portion 1441 is arranged at a height in which lower washer 1435 is arranged. However, as long as first annular protruding portion 1441 is out of the rotary locus of balls 1432 controlled by holder portion 1433 and as long as first annular protruding portion 1441 is arranged in a range in which the rotation of balls 1432 is not obstructed, even when first annular protruding portion 1441 exceeds the wall thickness of lower washer 1435, the same operational effect can be provided.

### (Embodiment 5)

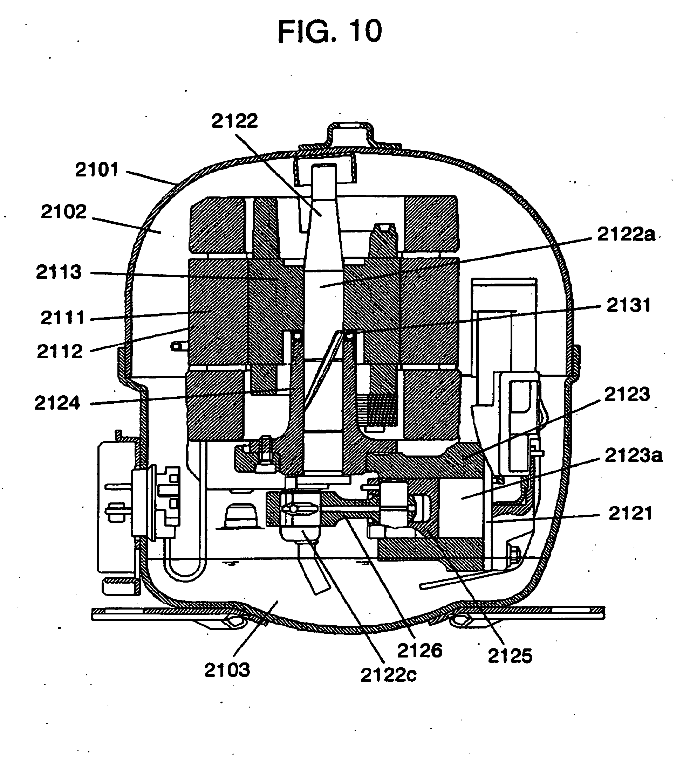

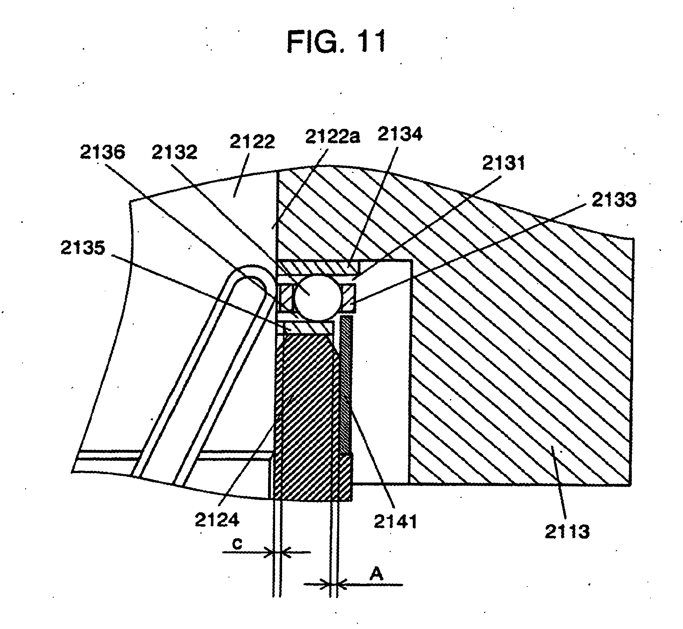

Fig. 10 is a longitudinal sectional view of a hermetic compressor of Embodiment 5 of the present invention. Fig. 11 is an enlarged sectional view showing a primary portion of the hermetic compressor of Embodiment 5 of the present invention.

In Figs. 10 and 11, refrigerant 2102 is charged into hermetic container 2101. Further, refrigerating machine oil 2103 is stored in hermetic container 2101. In this case, refrigerant 2102 is R600a which is a hydrocarbon refrigerant. Refrigerating machine oil 2103 is an oil, which is compatible with refrigerant 2102, such as synthetic fluid, mineral oil or polyol ester oil.

Electric driving element 2111 includes: stator 2112 connected to an external electric power source (not shown) ; and rotor 2113 arranged, forming a predetermined gap between rotor 2113 and stator 2112.

Compression element 2121 includes: shaft 2122; cylinder block 2123; bearing 2124; piston 2125; connecting portion 2126; and thrust ball bearing 2131. Shaft 2122 includes: main shaft portion 2122a, the outer diameter of which is d; and eccentric shaft portion 2122c connected to main shaft portion 2122a. Cylinder block 2123 composes compression chamber 2123a. Bearing 2124 supports shaft 2122, and is provided being integrated with or separated from cylinder block 2123. Piston 2125 reciprocates in compression chamber 2123a. Connecting portion 2126 connects piston 2125 with eccentric shaft portion 2122c. Thrust ball bearing 2131 is arranged between an upper end face of bearing 2124 and rotor 2113 fixed to main shaft portion 2122a. Compression element 2121 composes a reciprocating type compression mechanism.

Rotor 2113 is engaged with main shaft portion 2122a of the shaft. Stator 2112 is arranged and fixed in an upper portion of cylinder block 2123.

Thrust ball bearing 2131 includes: a plurality of balls 2132; holder portion 2133 for holding balls 2132; upper washer 2134 arranged above balls 2132; and lower washer 2135 arranged below balls 2132.

In bearing 2124, at the height in which lower washer 2135 is arranged, second cylindrical wall 2141 surrounding the outside of lower washer 2135 is provided. It is composed so that clearance A between the outer diameter of lower washer 2135 and the inner diameter of second cylindrical wall 2141 can be smaller than clearance c between the inner diameter of lower washer 2135 and the outer diameter of main shaft portion 2122a.

Since lower washer 2135 is made of carbon steel of not less than 70%, the hardness of lower washer 2135 is made to be about 95% of the hardness of balls 2132 of thrust ball bearing 2131. On rolling face 2136 with which balls 2132 comes into contact, flatness is maintained to be not more than 30 microns. Further, when rolling face 2136 is subjected to quenching, predetermined hardness can be ensured.

In the present embodiment, second cylindrical wall 2141 surrounding the outside is formed in such a manner that a stainless steel sheet is formed into a cylindrical shape. This second cylindrical wall 2141 is engaged with an outer circumference of an upper portion of bearing 2124. When the inner diameter of the cylindrical shape of second cylindrical wall 2141 is made to be a little smaller than the outer diameter of the outer circumference of the upper portion of bearing 2124, second cylindrical wall 2141 is fixed onto the outer circumference of the upper portion of bearing 2124 by an elastic force generated by second cylindrical wall 2141 itself at the time of engagement.

Operation and action of the hermetic compressor composed as described above will be explained below.

When stator 2112 is energized by an external electric power source (not shown), rotor 2113 is rotated together with shaft 2122. Due to the foregoing, an eccentric motion is conducted by eccentric shaft portion 2122c. Therefore, eccentric shaft portion 2122c reciprocates piston 2125 through connecting portion 2126 in compression chamber 2123a. Accordingly, a predetermined compressive motion to compress suction gas is conducted.

At this time, balls 2132 of thrust ball bearing 2131 support a vertical load generated by the dead weights of rotor 2113 and shaft 2122. An upper surface of upper washer 2134 is closely contacted with a lower end surface of rotor 2113 fixed to main shaft portion 2122a through viscosity of refrigerating machine oil 2103. Therefore, when shaft 2122 is rotated, upper washer 2134 is rotated synchronously with shaft 2122. On the other hand, a lower surface of lower washer 2135 is also closely contacted with an upper end portion of bearing 2124 through viscosity of refrigerating machine oil 2103. Therefore, lower washer 2135 is not rotated. Since slippage is generated between rotating balls 2132 and lower washer 2135, balls 2132 and holder portion 2133 are rotated being delayed without following a rotation of shaft 2122. In general, the coefficient of rolling friction is 10 to 20 times as low as the coefficient of sliding friction. Further, no metal contact is caused in the rolling bearing. Therefore, it is possible to conduct a stable motion by the rolling bearing.

Clearance A between the outer diameter of lower washer 2135 and the inner diameter of second cylindrical wall 2141 is smaller than clearance c between the inner diameter of lower washer 2135 and the outer diameter of main shaft portion 2122a. Accordingly, before lower washer 2135 comes into contact with main shaft portion 2122a, the outer diameter of lower washer 2135 and the inner diameter of second cylindrical wall 2141 come into contact with each other. That is, by second cylindrical wall 2141 surrounding the outside of lower washer 2135, the inner diameter of lower washer 2135 is arranged at a position where the inner diameter of lower washer 2135 does not come into contact with the outer diameter of rotating main shaft portion 2122a.

When second cylindrical wall 2141 surrounding the outside of lower washer 2135 is provided in an upper portion of bearing 2124, a regulation mechanism is composed.

Therefore, according to the present embodiment, the inner diameter of lower washer 2135 can be prevented from coming into contact with the outer diameter of main shaft portion 2122a by this regulation mechanism. Accordingly, there is no possibility that main shaft portion 2122a is damaged by lower washer 2135 and abrasion powder is generated. Therefore, it is possible to realize a highly reliable hermetic compressor.

Since it is composed in such a manner that second cylindrical wall 2141 is formed out of a substantially annular sheet member and lightly press-fitted into the outer diameter of bearing 2124, a size of second cylindrical wall 2141 is formed to be substantially the same as that of the outer diameter of bearing 2124. Therefore, these components are arranged in the minimized space. Accordingly, there is no possibility that second cylindrical wall 2141 interferes with other parts even when rotor 2113 exists in the periphery of bearing 2124.

Concerning thrust ball bearing 2131, only when shaft 2122 is inserted into thrust ball bearing 2131 at the time of assembling and the outer diameter of lower washer 2135 is accommodated in second cylindrical wall 2141, a regulation means can be easily provided. Therefore, it is unnecessary to use a special assembling method of press-fitting lower washer 2135. Accordingly, the assembling work property can be enhanced.

In this connection, in the present embodiment, second cylindrical wall 2141 is formed out of a substantially annular sheet which is formed differently from bearing 2124. However, of course, when second cylindrical wall 2141 is formed being integrated with bearing 2124 into one body, the same effect can be provided.

### (Embodiment 6)

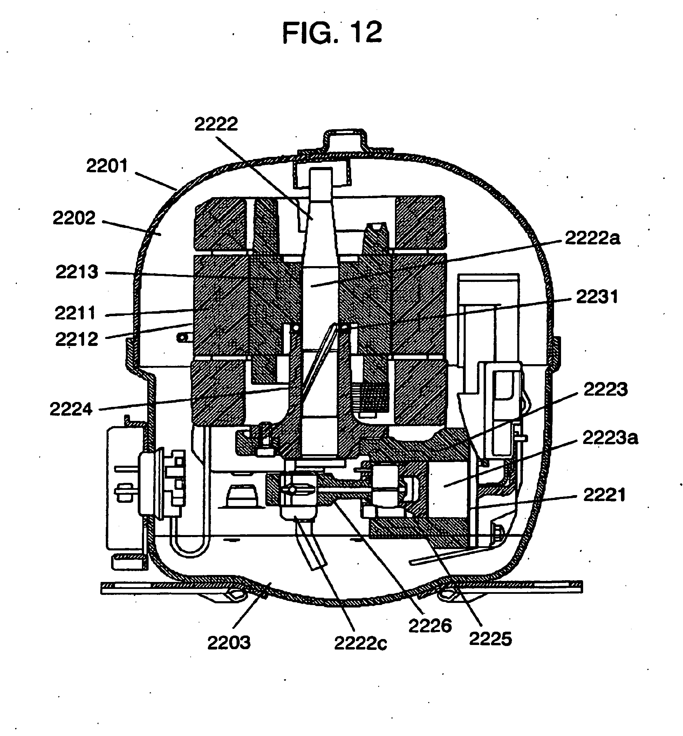

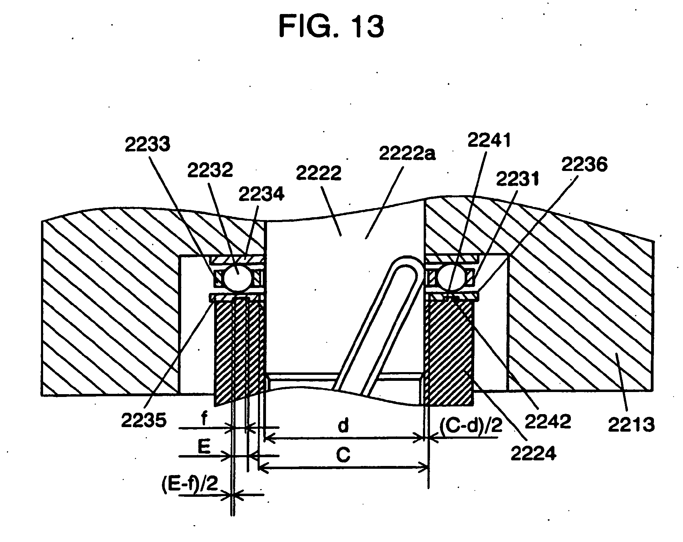

Fig. 12 is a longitudinal sectional view of a hermetic compressor of Embodiment 6 of the present invention. Fig. 13 is an enlarged sectional view showing a primary portion of the hermetic compressor of Embodiment 6 of the present invention.

In Figs. 12 and 13, refrigerant 2202 is charged into hermetic container 2201. Further, refrigerating machine oil 2203 is stored in hermetic container 2201. In this case, refrigerant 2202 is R600a which is a hydrocarbon refrigerant. Refrigerating machine oil 2203 is an oil, which is compatible with refrigerant 2202, such as synthetic fluid, mineral oil or polyol ester oil.

Electric driving element 2211 includes: stator 2212 connected to an external electric power source (not shown) ; and rotor 2213 arranged, forming a predetermined gap between rotor 2213 and stator 2212.

Compression element 2221 includes: shaft 2222; cylinder block 2223; bearing 2224; piston 2225; connecting portion 2226; and thrust ball bearing 2231. Shaft 2222 includes: main shaft portion 2222a, the outer diameter of which is d; and eccentric shaft portion 2222c connected to main shaft portion 2222a. Cylinder block 2223 composes compression chamber 2223a. Bearing 2224 supports shaft 2222, and is provided being integrated with cylinder block 2223 or being separated from cylinder block 2223. Piston 2225 reciprocates in compression chamber 2223a. Connecting portion 2226 connects piston 2225 with eccentric shaft portion 2222c. Thrust ball bearing 2231 is arranged between the upper end face of bearing 2224 and rotor 2213 fixed to main shaft portion 2222a. Compression element 2221 composes a reciprocating type compression mechanism.

Rotor 2213 is engaged with main shaft portion 2222a of the shaft. Stator 2212 is arranged and fixed in an upper portion of cylinder block 2223.

Thrust ball bearing 2231 includes: a plurality of balls 2232; holder portion 2233 for holding balls 2232; upper washer 2234 arranged above balls 2232; and lower washer 2235, the inner diameter of which is C, arranged below the balls 2232. On lower washer 2235, second recess portion 2241 is provided. On the upper end face of bearing 2224, second protruding portion 2242 is provided. These second recess portion 2241 and second protruding portion 2242 are idly engaged with each other. It is composed in such a manner that clearance (E - f)/2 in the thrust direction between width E in the thrust direction of the second recess portion 2241 and width f in the thrust direction of second protruding portion 2242 is smaller than clearance (C - d)/2 between inner diameter C of lower washer 2235 and outer diameter d of main shaft portion 2222a.

Since lower washer 2235 is made of carbon steel of not less than 70%, the hardness of lower washer 2235 is made to be about 95% of the hardness of balls 2232 of thrust ball bearing 2231. On rolling face 2236 with which balls 2232 comes into contact, flatness is maintained to be not more than 30 microns. Further, when rolling face 2236 is subjected to quenching, predetermined hardness can be ensured.

Operation and action of the hermetic compressor composed as described above will be explained below.

When stator 2212 is energized by an external electric power source (not shown), rotor 2213 is rotated together with shaft 2222. Due to the foregoing, an eccentric motion is conducted by eccentric shaft portion 2222c. Therefore, eccentric shaft portion 22226 reciprocates piston 2225 through connecting portion 2226 in compression chamber 2223a. Accordingly, a predetermined compressive motion to compress suction gas is conducted.

At this time, balls 2232 of thrust ball bearing 2231 support a vertical load generated by the dead weights of rotor 2213 and shaft 2222. An upper surface of upper washer 2234 is closely contacted with a lower surface of rotor 2213 fixed to main shaft portion 2222a through viscosity of refrigerating machine oil 2203. Therefore, when shaft 2222 is rotated, upper washer 2234 is rotated synchronously with shaft 2222. On the other hand, a lower surface of lower washer 2235 is also closely contacted with an upper end portion of bearing 2224 through viscosity of refrigerating machine oil 2203. Therefore, lower washer 2235 is not rotated. Since slippage is generated between rotating balls 2232 and lower washer 2235, balls 2232 and holder portion 2233 are rotated being delayed without following a rotation of shaft 2222. In general, the coefficient of rolling friction is 10 to 20 times as low as the coefficient of sliding friction. Further, no metal contact is caused in the rolling bearing. Therefore, it is possible to conduct a stable motion by the rolling bearing.

Clearance (E - f ) / 2 in the thrust direction between width E in the thrust direction of second recess portion 2241 and width f in the thrust direction of second protruding portion 2242 is smaller than clearance (C - d)/2 between inner diameter C of lower washer 2235 and outer diameter d of main shaft portion 2222a. Therefore, before lower washer 2235 comes into contact with main shaft portion 2222a, an end face of second recess portion 2241 and an end face of second protruding portion 2242 come into contact with each other. That is, by second recess portion 2241 and second protruding portion 2242, the inner diameter of lower washer 2235 is surely arranged at a position where the inner diameter of lower washer 2235 does not come into contact with the outer diameter of rotating main shaft portion 2222a. Therefore, according to the present embodiment, there is no possibility that the inner diameter of lower washer 2235 comes into contact with the outer diameter of main shaft portion 2222a.

As described above, when second recess portion 2241 and second protruding portion 2242, which are idly engaged with each other, are respectively provided on lower washer 2235 and the upper end face of bearing 2224, a regulation mechanism is composed.

Therefore, according to the present embodiment, the inner diameter of lower washer 2235 can be prevented from coming into contact with the outer diameter of main shaft portion 2222a by this regulation mechanism. Accordingly, there is no possibility that main shaft portion 2222a is damaged by the lower washer 2235 and abrasion powder is generated. Therefore, it is possible to realize a highly reliable hermetic compressor.

Second recess portion 2241 can be formed, for example, simultaneously when lower washer 2235 is formed by means of press forming. Second protruding portion 2242 can be formed, for example, simultaneously when bearing 2242 is molded by means of die-cast molding. Therefore, it is unnecessary to add a new manufacturing step. Accordingly, it is possible to enhance the productivity of producing a hermetic compressor.

Since thrust ball bearing 2231 can be incorporated into the device only when shaft 2122 is inserted into the thrust ball bearing and when second recess portion 2241 and second protruding portion 2242 are put on each other and the lower washer is arranged on the upper end face of the bearing at the time of assembling, it is unnecessary to use a special assembling method such as a method of press-fitting lower washer 2235. Accordingly, the working property can be enhanced at the time of assembling.

In the present embodiment, second recess portion 2241 is a hollow portion which does not penetrate lower washer 2235. However, as long as second protruding portion 2242 does not exceed the wall thickness of lower washer 2235 and second recess portion 2241 is out of the rotary locus of balls 2232 controlled by holder portion 2233, of course, second recess portion 2241 can provide the same operational effect as that of a structure in which the second recess portion 2241 is formed into a hole penetrating lower washer 2235.

In the present embodiment, second recess portion 2241 is a hollow portion not penetrating lower washer 2235. However, as long as second protruding portion 2242 is out of the rotary locus of balls 2232 controlled by holder portion 2233 and second protruding portion 2242 is arranged in a range in which second protruding portion 2242 can not obstruct rotating balls 2232, of course, the same operational effect can be provided even when second recess portion 2241 is a hole penetrating lower washer 2235 and second protruding portion 2242 exceeds the wall thickness of lower washer 2235.

### (Embodiment 7)

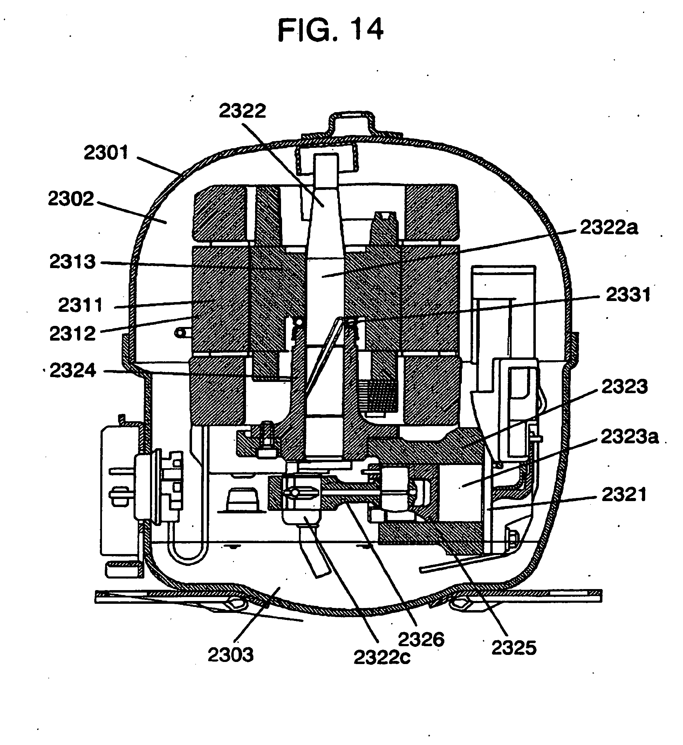

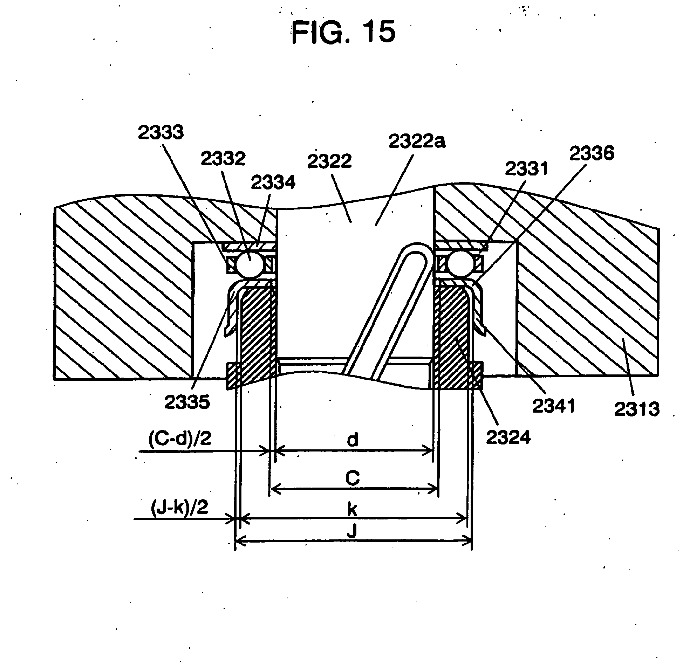

Fig. 14 is a longitudinal sectional view of a hermetic compressor of Embodiment 7 of the present invention. Fig. 15 is an enlarged sectional view showing a primary portion of the hermetic compressor of Embodiment 7 of the present invention.

In Figs. 14 and 15, refrigerant 2302 is charged into hermetic container 2301. Further, refrigerating machine oil 2303 is stored in hermetic container 2301. In this case, refrigerant 2302 is R600a which is a hydrocarbon refrigerant. Refrigerating machine oil 2303 is an oil, which is compatible with refrigerant 2302, such as synthetic fluid, mineral oil or polyol ester oil. ,

Electric driving element 2311 includes: stator 2312 connected to an external electric power source (not shown) ; and rotor 2313 arranged, forming a predetermined gap between rotor 2313 and stator 2312.

Compression element 2321 includes: shaft 2322; cylinder block 2323; bearing 2324; piston 2325; connecting portion 2326; and thrust ball bearing 2331. Shaft 2322 includes: main shaft portion 2322a, the outer diameter of which is d; and eccentric shaft portion 2322c connected to main shaft portion 2322a. Cylinder bock 2323 composes compression chamber 2323a. Bearing 2324 supports shaft 2322, and is provided being integrated with cylinder block 2323 or being separated from cylinder block 2323. Piston 2325 reciprocates in compression chamber 2323a. Connecting portion 2326 connects piston 2325 with eccentric shaft portion 2322c. Thrust ball bearing 2331 is arranged between the upper end face of bearing 2324 and rotor 2313 fixed to main shaft portion 2322a. Compression element 2321 composes a reciprocating type compression mechanism.

Rotor 2313 is engaged with main shaft portion 2322a of the shaft. Stator 2312 is arranged and fixed in an upper potion of cylinder block 2323.

Thrust ball bearing 2331 includes: a plurality of balls 2332; holder portion 2333 for holding balls 2332; upper washer 2334 arranged above balls 2332; and lower washer 2335, arranged below the balls 2332.

Lower washer 2335 includes: rolling face 2336 with which balls 2332 come into contact; and cylindrical second bent portion 2341, the inner diameter of which is C. Clearance (J- k)/2 in the thrust direction between inner diameter J of second bent portion 2341 and outer diameter k of bearing 2334 is smaller than clearance (C - d) / 2 between inner diameter C of lower washer 2335 and outer diameter d of main shaft portion 2322a.

Since lower washer 2335 is made of carbon steel of not less than 70%, the hardness of lower washer 2335 is made to be about 95% of the hardness of balls 2332 of thrust ball bearing 2331. On rolling face 2336 with which balls 2332 comes into contact, flatness is maintained to be not more than 30 microns. In order to ensure this flatness, rolling face 2336 is formed by means of pushing. After that, rolling face 2136 is subjected to quenching so as to ensure the predetermined hardness and flatness.

Operation and action of the hermetic compressor composed as described above will be explained below.

When stator 2312 is energized by an external electric power source (not shown), rotor 2313 is rotated together with shaft 2322. Due to the foregoing, an eccentric motion is conducted by eccentric shaft portion 2322c. Therefore, eccentric shaft portion 2322c reciprocates piston 2325 through connecting portion 2326 in compression chamber 2323a. Accordingly, a predetermined compressive motion to compress suction gas is conducted.

At this time, balls 2332 of thrust ball bearing 2231 support a vertical load generated by the dead weights of rotor 2313 and shaft 2322. An upper surface of upper washer 2334 is closely contacted with a lower end surface of rotor 2313 fixed to main shaft portion 2322a through viscosity of refrigerating machine oil 2303. Therefore, when shaft 2322 is rotated, upper washer 2334 is rotated synchronously with shaft 2322. On the other hand, a lower surface of lower washer 2335 is also closely contacted with an upper end portion of bearing 2324 through viscosity of refrigerating machine oil 2303. Therefore, lower washer 2335 is not rotated. Since slippage is generated between rotating balls 2332 and lower washer 2335, balls 2232 and holder portion 2333 are rotated being delayed without following a rotation of shaft 2322. In general, the coefficient of rolling friction is 10 to 20 times as low as the coefficient of sliding friction. Further, no metal contact is caused in the rolling bearing. Therefore, it is possible to conduct a stable motion by the rolling bearing.

Clearance (J - k) /2 in the thrust direction between inner diameter J of second bent portion 2341 and outer diameter k of bearing 2334 is smaller than clearance (C - d) /2 between inner diameter C of lower washer 2335 and outer diameter d of main shaft portion 2322a. Therefore, before lower washer 2335 comes into contact with main shaft portion 2322a, inner diameter J of second bent portion 2341 and outer diameter k of bearing 2324 come into contact with each other. That is, by second bent portion 2341, lower washer 2335 is surely arranged at a position where the inner diameter of lower washer 2335 is not contacted with rotating main shaft portion 2322a.

As described above, when second bent portion 2341 is provided on the outer circumference of lower washer 2335, a regulation mechanism is composed.

Therefore, according to the present embodiment, the inner diameter of lower washer 2335 can be prevented from coming into contact with the outer diameter of main shaft portion 2322a by this regulation mechanism. Accordingly, there is no possibility that main shaft portion 2322a is damaged by the lower washer 2335 and abrasion powder is generated. Therefore, it is possible to realize a highly reliable hermetic compressor.

Concerning thrust ball bearing 2331, only when shaft 2322 is inserted into thrust ball bearing 2331 and second bent portion 2341 is idly engaged with an upper end of bearing 2324 at the time of assembling, it is possible to incorporate thrust ball bearing 2331. That is, it is unnecessary to use a special assembling method such as press-fitting lower washer 2335. Accordingly, the property of assembling work can be enhanced.

### (Embodiment 8)

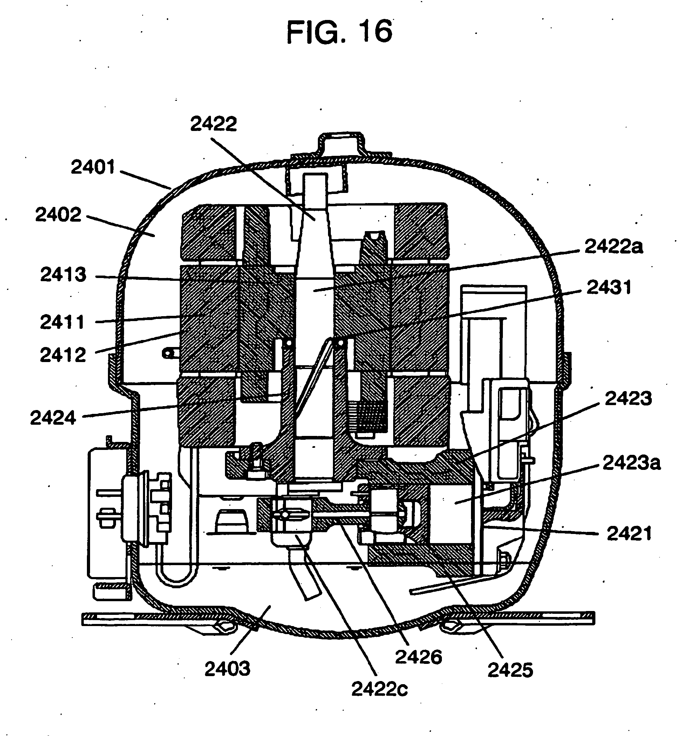

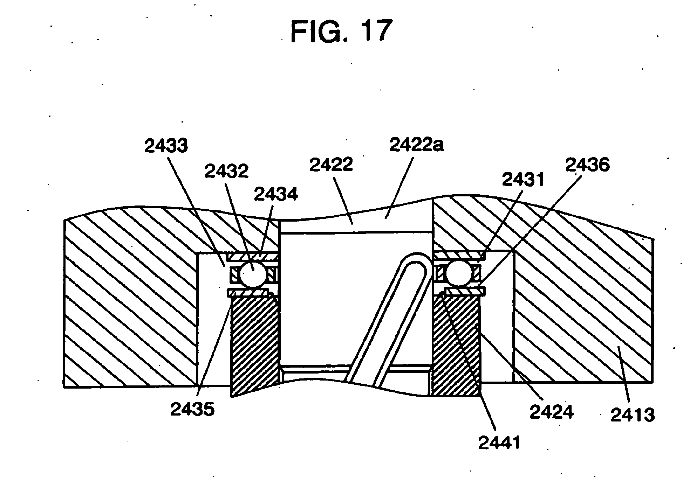

Fig. 16 is a longitudinal sectional view of a hermetic compressor of Embodiment 8 of the present invention. Fig. 17 is an enlarged sectional view showing a primary portion of the hermetic compressor of Embodiment 8 of the present invention.

In Figs. 16 and 17, refrigerant 2402 is charged into hermetic container 2401. Further, refrigerating machine oil 2403 is stored in hermetic container 2301. In this case, refrigerant 2402 is R600a which is a hydrocarbon refrigerant. Refrigerating machine oil 2403 is an oil, which is compatible with refrigerant 2402, such as synthetic fluid, mineral oil or polyol ester oil.

Electric driving element 2411 includes: stator 2412 connected to an external electric power source (not shown); and rotor 2413 arranged, forming a predetermined gap between rotor 2413 and the inside of stator 2412.

Compression element 2421 includes: shaft 2422; cylinder block 2423; bearing 2424; piston 2425; connecting portion 2426; and thrust ball bearing 2431. Shaft 2422 includes: main shaft portion 2422a; and eccentric shaft portion 2422c connected to main shaft portion 2422a. Cylinder block 2423 composes compression chamber 2423a. Bearing 2424 supports shaft 2422, and is provided being integrated with cylinder block 2423 or being separated from cylinder block 2423. Piston 2425 reciprocates in compression chamber 2423a. Connecting portion 2426 connects piston 2425 with eccentric shaft portion 2422c. Thrust ball bearing 2431 is arranged between the upper end face of bearing 2424 and rotor 2413 fixed to main shaft portion 2422a. Compression element 2421 composes a reciprocating type compression mechanism.

Rotor 2413 is engaged with main shaft portion 2422a of the shaft. Stator 2412 is arranged and fixed in an upper portion of cylinder block 2423.

Thrust ball bearing 2431 includes: a plurality of balls 2432; holder portion 2433 for holding balls 2432; upper washer 2434 arranged above balls 2432; and lower washer 2435, arranged below the balls 2432. In bearing 2424, at the height in which lower washer 2435 is arranged, second annular protruding portion 2441, which is surrounded inside the lower washer, is provided. Therefore, under the condition that the lower surface of lower washer 2435 is closely contacted with an upper end face of bearing 2424, an inner diameter of lower washer 2435 can not be moved inside from second annular protruding portion 2441.

Since lower washer 2435 is made of carbon steel of not less than 70%, the hardness of lower washer 2435 is made to be about 95% of the hardness of balls 2432 of thrust ball bearing 2431. On rolling face 2436 with which balls 2432 comes into contact, flatness is maintained to be not more than 30 microns. Further, when rolling face 2436 is subjected to quenching, predetermined hardness can be ensured.

Operation and action of the hermetic compressor composed as described above will be explained below.

When stator 2412 is energized by an external electric power source (not shown), rotor 2413 is rotated together with shaft 2422. Due to the foregoing, an eccentric motion is conducted by eccentric shaft portion 2422c. Therefore, eccentric shaft portion 2422c reciprocates piston 2425 through connecting portion 2426 in compression chamber 2423a. Accordingly, a predetermined compressive motion to compress suction gas is conducted.

At this time, balls 2432 of thrust ball bearing 2431 support a vertical load generated by the dead weights of rotor 2413 and shaft 2422. An upper surface of upper washer 2434 is closely contacted with a lower end surface of rotor 2413 fixed to main shaft portion 2422a through viscosity of refrigerating machine oil 2403. Therefore, when shaft 2422 is rotated, upper washer 2434 is rotated synchronously with shaft 2422. On the other hand, a lower surface of lower washer 2435 is also closely contacted with an upper end portion of bearing 2424 through viscosity of refrigerating machine oil 2403. Therefore, lower washer 2435 is not rotated. Since slippage is generated between rotating balls 2432 and lower washer 2435, balls 2432 and holder portion 2433 are rotated being delayed without following a rotation of shaft 2422. In general, the coefficient of rolling friction is 10 to 20 times as low as the coefficient of sliding friction. Further, no metal contact is caused in the rolling bearing. Therefore, it is possible to conduct a stable motion by the rolling bearing.

Since second annular protruding portion 2441 exists between an inner diameter of lower washer 2435 and an outer diameter of main shaft portion 2422a, the inner diameter of lower washer 2435 comes into contact with second annular protruding portion 2441 before it comes into contact with the outer diameter of main shaft portion 2422a. That is, by second annular protruding portion 2441, the inner diameter of lower washer 2435 is surely arranged at a position where the inner diameter of lower washer 2435 does not come into contact with the outer diameter of rotating main shaft portion 2422a.

When the annular protruding portion is provided inside the upper end face of the bearing, a regulation mechanism is composed.

Therefore, according to the present embodiment, the inner diameter of lower washer 2435 can be prevented from coming into contact with the outer diameter of main shaft portion 2422a by this regulation mechanism. Accordingly, there is no possibility that main shaft portion 2422a is damaged and abrasion powder is generated. Therefore, it is possible to realize a highly reliable hermetic compressor.

Second annular protruding portion 2441 can be formed, for example, simultaneously when bearing 2424 is molded by means of die-cast molding. Therefore, it is unnecessary to add a manufacturing step. Accordingly, it is possible to enhance the productivity of producing a hermetic compressor.

Since thrust ball bearing 2431 can be incorporated into the device only when shaft 2422 is inserted into the thrust ball bearing and when lower washer 2435 is arranged so that the inner diameter of lower washer 2435 can be laid along the outer diameter of second annular protruding portion 2441, it is unnecessary to use a special assembling method such as a method of press-fitting lower washer 2435. Accordingly, the working property can be enhanced at the time of assembling.

In this connection, in the present embodiment, second annular protruding portion 2441 is arranged at a height in which lower washer 2435 is arranged. However, as long as second annular protruding portion 2441 is out of the rotary locus of balls 2432 controlled by holder portion 2433 and as long as second annular protruding portion 2441 is arranged in a range in which rotation of balls 2432 is not obstructed, even when second annular protruding portion 2441 exceeds the wall thickness of lower washer 2435, the same operational effect can be provided.

### Industrial Applicability

A hermetic compressor of the present invention is highly efficient and reliable. Therefore, the hermetic compressor of the present invention can be applied to a refrigerating compressor incorporated into an air conditioner, a refrigerator and so forth.

## Claims

1. A hermetic compressor comprising:
an electrically driving element (1111) having a stator (1112) and a rotor (1113) the electrically driving element being accommodated In a hermetic container (1101): and
a compression element (1121) driven by the electrically driving element (1111), the compression element being accommodated in the hermetic container (1101),
the compression element (1121) comprising:
a shaft (1122), wherein the shaft comprises a main shaft portion (1122a) and an eccentric shaft portion (1122c) formed through a flange portion (1122b);
a cylinder block (1123) forming a compression chamber (1123a);
a bearing (1124) for supporting the shaft (1122), arranged in the cylinder block (1123);
a piston (1125) reciprocated in the compression chamber (1123a);
a connecting portion (1128) for connecting the piston (1125) with the eccentric shaft portion (1122c); and
a thrust ball bearing (1131),
the thrust ball bearing (1131) comprising:
a plurality of balls (1132);
a holder portion (1133) for holding the balls (1132);
an upper washer (1134) arranged above the balls (1132); and
a lower washer (1135) arranged below the balls (1132),
wherein the thrust ball bearing (1131) is arranged between the flange portion (1122c) and an upper end face of the bearing (1124),
**characterized in that**
the hermetic compressor further comprises a regulation mechanism for regulating the lower washer (1135) so that a movable distance in the thrust direction of the lower washer (1135) can be shorter than clearance formed between an inner diameter of the lower washer (1135) and an outer diameter of the main shaft portion (1122a),
the regulation mechanism comprises a first cylindrical wall (1141), which is arranged in the cylinder block (1123) or the bearing (1124), surrounding the outside of the lower washer (1135), and
clearance between an outer diameter (b) of the lower washer (1135) and an inner diameter (A) of the first cylindrical wall (1141) is smaller than clearance between an Inner diameter (C) of the lower washes (1135) and an outer diameter (d) of the main shaft portion (1122a).

2. The hermetic compressor of Claim 1,
wherein the regulation mechanism comprises a first recess portion (1241) and a first protruding portion (1242) which are idly engaged with each other and respectively arranged on the lower washer (1235) and the upper end face of the bearing (1224); and
wherein clearance in the thrust direction between the first recess portion (1241) and the first protruding portion (1242) is smaller than clearance between an inner diameter (C) of the lower washer (1235) and an outer diameter (d) of the main shaft portion (1122a).

3. The hermetic compressor of Claim 1,
wherein the regulation mechanism comprises a first bent portion (1341) on an outer circumference of the lower washer (1335); and
wherein clearance In the thrust direction between an Inner circumferential face of the first bent portion (1341) and an outer diameter (k) of the bearing (1324) is smaller than clearance between an inner diameter (C) of the lower washer (1335) and an outer diameter (d) of the main shaft portion (1122a).

4. The hermetic compressor of Claim 1,
wherein the regulation mechanism comprises a first angular protruding portion (1441) arranged inside an upper end face of the bearing (1424); and
wherein the first annular protruding portion (1441) and an inner circumference of the lower washer (1435) are idly engaged with each other.

5. A hermetic compressor comprising:
an electrically driving element (2111) having a stator (2112) and a rotor (2113) the electrically driving element being accommodated in a hermetic container (2101); and
a compression element (2121) driven by the electrically driving element (2111), the compression element being accommodated In the hermetic container (2101),
the compression element (2121) comprising:
a shaft (2122); wherein the shaft (2122) comprises a main shaft portion (2122a) to which an eccentric shaft portion (2122c) and the rotor (2113) are fixed,
a cylinder block (2123) forming a compression chamber (2123a);
a bearing (2124) for supporting the shaft (2122), arranged In the cylinder block (2123);
a Piston (2125) reciprocated in the compression chamber (2123a);
a connecting portion (2126) for connecting the piston (2125) with the eccentric shaft portion (2122c); and
a thrust ball bearing (2131),
the thrust ball bearing (2131) comprising
a plurality of balls (2132);
a holder portion (2133) for holding the balls (2132);
an upper washer (2134) arranged above the balls (2132); and
a lower washer (2135) arranged below the balls (2132),
**characterized in that**
the hermetic compressor further comprises a regulation mechanism for regulating the lower washer (2135) so that a movable distance in the thrust direction of the lower washer (2135) can be shorter than clearance formed between an inner diameter of the lower washer (2135) and an outer diameter of the main shaft portion (2122a),
the thrust ball bearing (2131) is arranged between an upper end face of the bearing (2124) and the rotor (2113) fixed to the main shaft portion (2122a),
a second cylindrical wall (2141) for surrounding the outside of the lower washer (2135) is provided in an upper portion of the bearing (2124); and
the regulation mechanism is composed in such a manner that clearance between an outer diameter of the lower washer (2135) and an inner diameter of the second cylindrical wall (2141) is smaller than clearance between an inner diameter of the lower washer (2135) and an outer diameter of the main shaft portion (2122a).

6. The hermetic compressor of Claim 5,
wherein the regulation mechanism comprises a second recess portion (2241) and a second protruding portion (2242) which are idly engaged with each other and respectively arranged on the lower washer (2235)and the upper end face of the bearing (2224); and
wherein clearance in the thrust direction between the second recess portion (2241) and the second protruding portion (2242) is smaller than clearance between an inner diameter of the lower washer (2235) and an outer diameter of the main shaft portion (2222a).

7. The hermetic compressor of Claim 5,
wherein the regulation mechanism comprises a second bent portion (2341) on an outer circumference of the lower washer (2335); and
wherein clearance in the thrust direction between an inner circumferential face of the second bent portion (2341) and an outer diameter (J) of the bearing (2324) is smaller than clearance between an inner diameter (C) of the lower washer (2335) and an outer diameter (d) of the main shaft portion (2322a).

8. The hermetic compressor of Claim 5,
wherein the regulation mechanism comprises a second annular protruding portion (2441) arranged inside an upper end face of the bearing (2424); and
wherein the second annular protruding portion (2441) and an inner circumference of the lower washer (2435) are idly engaged with each other.

## Patentansprüche

1. Hermetischer Kompressor, der umfasst:
ein elektrisch antreibendes Element (1111) mit einem Stator (1112) und einem Rotor (1113), wobei das elektrisch antreibende Element in einem hermetischen Behälter (1101) aufgenommen ist; und
ein Kompressionselement (1121), das durch das elektrisch antreibende Element (1111) angetrieben wird, wobei das Kompressionselement in dem hermetischen Behälter (1101) aufgenommen ist,
wobei das Kompressionselement (1121) umfasst:
eine Welle (1122), wobei die Welle einen Haupt-Wellenabschnitt (1122a) und einen exzentrischen Wellenabschnitt (1122c) umfasst, der über einem Flanschabschnitt (1122b) ausgebildet ist;
einen Zylinderblock (1123), der eine Kompressionskammer (1123a) bildet;
ein Lager (1124) zum Lagern der Welle (1122), das in dem Zylinderblock (1123) angeordnet ist;
einen Kolben (1125), der sich in der Kompressionskammer (1123a) hin- und herbewegt;
einen Verbindungsabschnitt (1126) zum Verbinden des Kolbens (1125) mit dem exzentrischen Wellenabschnitt (1122c); und
ein Axial-Kugellager (1131),
wobei das Axial-Kugellager (1131) umfasst:
eine Vielzahl von Kugeln (1132);
einen Halteabschnitt (1133) zum Halten der Kugeln (1132);
eine obere Scheibe (1134), die oberhalb der Kugeln (1132) angeordnet ist; und
eine untere Scheibe (1135), die unterhalb der Kugeln (1132) angeordnet ist,
wobei das Axial-Kugellager (1131) zwischen dem Flanschabschnitt (1122c) und einer oberen Endfläche des Lagers (1124) angeordnet ist,
**dadurch gekennzeichnet, dass**
der hermetische Prozessor des Weiteren einen Regulierungsmechanismus umfasst, mit dem die untere Scheibe (1135) so reguliert wird, dass eine Bewegungsstrecke in der axialen Richtung der unteren Scheibe (1135) kürzer sein kann als ein Zwischenraum, der zwischen einem Innendurchmesser der unteren Scheibe (1135) und einem Außendurchmesser des Haupt-Wellenabschnitts (1122a) ausgebildet ist,
der Regulierungsmechanismus eine erste zylindrische Wand (1141) umfasst, die in dem Zylinderblock (1123) oder dem Lager (1124) angeordnet ist und die Außenseite der unteren Scheibe (1135) umgibt, und
der Zwischenraum zwischen einem Außendurchmesser (b) der unteren Scheibe (1135) und einem Innendurchmesser (A) der ersten zylindrischen Wand (1141) kleiner ist als ein Zwischenraum zwischen einem Innendurchmesser (C) der unteren Scheibe (1135) und einem Außendurchmesser (d) des Haupt-Wellenabschnitts (1122a).

2. Hermetischer Kompressor nach Anspruch 1,
wobei der Regulierungsmechanismus einen ersten vertieften Abschnitt (1241) und einen ersten vorstehenden Abschnitt (1242) umfasst, die frei miteinander in Eingriff sind und an der unteren Scheibe (1235) bzw. der oberen Endfläche des Lagers (1224) angeordnet sind; und
wobei ein Zwischenraum in der axialen Richtung zwischen dem ersten vertieften Abschnitt (1241) und dem ersten vorstehenden Abschnitt (1242) kleiner ist als der Zwischenraum zwischen einem Innendurchmesser (C) der unteren Scheibe (1235) und einem Außendurchmesser (d) des Haupt-Wellenabschnitts (1122a).

3. Hermetischer Kompressor nach Anspruch 1,
wobei der Regulierungsmechanismus einen ersten gebogenen Abschnitt (1341) an einem Außenumfang der unteren Scheibe (1335) umfasst; und
wobei ein Zwischenraum in der axialen Richtung zwischen einer Innenumfangsfläche des ersten gebogenen Abschnitts (1341) und einem Außendurchmesser (k) des Lagers (1324) kleiner ist als der Zwischenraum zwischen einem Innendurchmesser (C) der unteren Scheibe (1335) und einem Außendurchmesser (d) des Haupt-Wellenabschnitts (1122a).

4. Hermetischer Kompressor nach Anspruch 1,
wobei der Regulierungsmechanismus einen ersten ringförmigen vorstehenden Abschnitt (1441) umfasst, der im Inneren einer oberen Endfläche des Lagers (1424) angeordnet ist; und
wobei der erste ringförmige vorstehende Abschnitt (1441) und ein Innenumfang der unteren Scheibe (1435) frei miteinander in Eingriff sind.

5. Hermetischer Kompressor, der umfasst:
ein elektrisch antreibendes Element (2111) mit einem Stator (2112) und einem Rotor (2113), wobei das elektrisch antreibende Element in einem hermetischen Behälter (2101) aufgenommen ist; und
ein Kompressionselement (2121), das durch das elektrisch antreibende Element (2111) angetrieben wird, wobei das Kompressionselement in dem hermetischen Behälter (2101) aufgenommen ist,
wobei das Kompressionselement (2121) umfasst:
eine Welle (2122), wobei die Welle (2122) einen Haupt-Wellenabschnitt (2122a) umfasst, an dem ein exzentrischer Wellenabschnitt (2122c) und der Rotor (2113) befestigt sind,
einen Zylinderblock (2123), der eine Kompressionskammer (2123a) bildet;
ein Lager (2124) zum Lagern der Welle (2122), das in dem Zylinderblock (2123) angeordnet ist;
einen Kolben (2125), der sich in der Kompressionskammer (2123a) hin- und herbewegt;
einen Verbindungsabschnitt (2126) zum Verbinden des Kolbens (2125) mit dem exzentrischen Wellenabschnitt (2122c); und
ein Axial-Kugellager (2131),
wobei das Axial-Kugellager (2131) umfasst:
eine Vielzahl von Kugeln (2132);
einen Halteabschnitt (2133) zum Halten der Kugeln (2132);
eine obere Scheibe (2134), die oberhalb der Kugeln (2132) angeordnet ist; und
eine untere Scheibe (2135), die unterhalb der Kugeln (2132) angeordnet ist,
**dadurch gekennzeichnet, dass**
der hermetische Prozessor des Weiteren einen Regulierungsmechanismus umfasst, mit dem die untere Scheibe (2135) so reguliert wird, dass eine Bewegungsstrecke in der axialen Richtung der unteren Scheibe (2135) kürzer sein kann als ein Zwischenraum, der zwischen einem Innendurchmesser der unteren Scheibe (2135) und einem Außendurchmesser des Haupt-Wellenabschnitts (2122a) ausgebildet ist,
das Axial-Kugellager (2131) zwischen einer oberen Endfläche des Lagers (2124) und dem Rotor (2113) angeordnet ist, der an dem Haupt-Wellenabschnitt (2122a) befestigt ist,
eine zweite zylindrische Wand (2141), die die Außenseite der unteren Scheibe (2135) umgibt, in einem oberen Abschnitt des Lagers (2124) vorhanden ist; und
der Regulierungsmechanismus so zusammengesetzt ist, dass der Zwischenraum zwischen einem Außendurchmesser der unteren Scheibe (2135) und einem Innendurchmesser der zweiten zylindrischen Wand (2141) kleiner ist als ein Zwischenraum zwischen einem Innendurchmesser der unteren Scheibe (2135) und einem Außendurchmesser des Haupt-Wellenabschnitts (2122a).

6. Hermetischer Kompressor nach Anspruch 5,
wobei der Regulierungsmechanismus einen zweiten vertieften Abschnitt (2241) und einen zweiten vorstehenden Abschnitt (2242) umfasst, die frei miteinander in Eingriff sind und an der unteren Scheibe (2235) bzw. der oberen Endfläche des Lagers (2224) angeordnet sind; und
wobei ein Zwischenraum in der axialen Richtung zwischen dem zweiten vertieften Abschnitt (2241) und dem zweiten vorstehenden Abschnitt (2242) kleiner ist als der Zwischenraum zwischen einem Innendurchmesser der unteren Scheibe (2235) und einem Außendurchmesser des Haupt-Wellenabschnitts (2222a).

7. Hermetischer Kompressor nach Anspruch 5,
wobei der Regulierungsmechanismus einen zweiten gebogenen Abschnitt (2341) an einem Außenumfang der unteren Scheibe (2335) umfasst; und
wobei ein Zwischenraum in der axialen Richtung zwischen einer Innenumfangsfläche des zweiten gebogenen Abschnitts (2341) und einem Außendurchmesser (J) des Lagers (2324) kleiner ist als der Zwischenraum zwischen einem Innendurchmesser (C) der unteren Scheibe (2335) und einem Außendurchmesser (d) des Haupt-Wellenabschnitts (2322a).

8. Hermetischer Kompressor nach Anspruch 5,
wobei der Regulierungsmechanismus einen zweiten ringförmigen vorstehenden Abschnitt (2441) umfasst, der im Inneren einer oberen Endfläche des Lagers (2424) angeordnet ist; und
wobei der zweite ringförmige vorstehende Abschnitt (2441) und ein Innenumfang der unteren Scheibe (2435) in frei miteinander in Eingriff sind.

## Revendications

1. Compresseur hermétique comprenant:
un élément d'entraînement électrique (1111) ayant un stator (1112) et un rotor (1113), l'élément d'entraînement électrique étant accueilli dans un coffret hermétique (1101); et
un élément de compression (1121) entraîné par l'élément d'entraînement électrique (1111), l'élément de compression étant accueilli dans le coffret hermétique (1101),
l'élément de compression (1121) comprenant:
un arbre (1122), où l'arbre comprend une partie d'arbre principale (1122a) et une partie d'arbre excentrique (1122c) formées à travers une partie de bride (1122b);
un bloc-cylindres (1123) formant une chambre de compression (1123a);
un palier (1124) pour soutenir l'arbre (1122), agencé dans le bloc-cylindres (1123);
un piston (1125) animé d'un mouvement de va-et-vient dans la chambre de compression (1123a);
une partie de raccordement (1126) pour raccorder le piston (1125) à la partie d'arbre excentrique (1122c); et
un roulement de butée à billes (1131),
le roulement de butée à billes (1131) comprenant:
une pluralité de billes (1132);
une partie de maintien (1133) pour maintenir les billes (1132);
une rondelle supérieure (1134) agencée au-dessus des billes (1132); et
une rondelle inférieure (1135) agencée sous les billes (1132),
où le roulement de butée à billes (1131) est agencé entre la partie de bride (1122c) et une face d'extrémité supérieure du palier (1124),
**caractérisé en ce que**
le compresseur hermétique comprend en plus un mécanisme de régulation pour réguler la rondelle inférieure (1135) de sorte qu'une distance de mouvement dans la direction de poussée de la rondelle inférieure (1135) puisse être plus courte qu'un jeu formé entre un diamètre interne de la rondelle inférieure (1135) et un diamètre externe de la partie d'arbre principale (1122a),
le mécanisme de régulation comprend une première paroi cylindrique (1141), qui est agencée dans le bloc-cylindres (1123) ou le palier (1124), entourant la partie extérieure de la rondelle inférieure (1135), et
un jeu entre un diamètre externe (b) de la rondelle inférieure (1135) et un diamètre interne (A) de la première paroi cylindrique (1141) est plus petit qu'un jeu entre un diamètre interne (C) de la rondelle inférieure (1135) et un diamètre externe (d) de la partie d'arbre principale (1122a).

2. Compresseur hermétique de la revendication 1,
dans lequel le mécanisme de régulation comprend une première partie d'évidement (1241) et une première partie en saillie (1242) qui sont engagées de manière libre l'une avec l'autre et agencées respectivement sur la rondelle inférieure (1235) et la face d'extrémité supérieure du palier (1224); et
où un jeu dans la direction de poussée entre la première partie d'évidement (1241) et la première partie en saillie (1242) est plus petit qu'un jeu entre un diamètre interne (C) de la rondelle inférieure (1235) et un diamètre externe (d) de la partie d'arbre principale (1122a).

3. Compresseur hermétique de la revendication 1,
dans lequel le mécanisme de régulation comprend une première partie incurvée (1341) sur une circonférence externe de la rondelle inférieure (1335); et
où un jeu dans la direction de poussée entre une face circonférentielle interne de la première partie incurvée (1341) et un diamètre externe (k) du palier (1324) est plus petit qu'un jeu entre un diamètre interne (C) de la rondelle inférieure (1335) et un diamètre externe (d) de la partie d'arbre principale (1122a).

4. Compresseur hermétique de la revendication 1,
dans lequel le mécanisme de régulation comprend une première partie en saillie annulaire (1441) agencée à l'intérieur d'une face d'extrémité supérieure du palier (1424); et
où la première partie en saillie annulaire (1441) et une circonférence interne de la rondelle inférieure (1435) sont engagées de manière libre l'une avec l'autre.

5. Compresseur hermétique comprenant:
un élément d'entraînement électrique (2111) ayant un stator (2112) et un rotor (2113), l'élément d'entraînement électrique étant accueilli dans un coffret hermétique (2101); et
un élément de compression (2121) entraîné par l'élément d'entraînement électrique (2111), l'élément de compression étant accueilli dans le coffret hermétique (2101),
l'élément de compression (2121) comprenant:
un arbre (2122); où l'arbre (2122) comprend une partie d'arbre principale (2122a) à laquelle une partie d'arbre excentrique (2122c) et le rotor (2113) sont fixés,
un bloc-cylindres (2123) formant une chambre de compression (2123a);
un palier (2124) pour soutenir l'arbre (2122), agencé dans le bloc-cylindres (2123);
un piston (2125) animé d'un mouvement de va-et-vient dans la chambre de compression (2123a);
une partie de raccordement (2126) pour raccorder le piston (2125) à la partie d'arbre excentrique (2122c); et
un roulement de butée à billes (2131),
le roulement de butée à billes (2131) comprenant:
une pluralité de billes (2132);
une partie de maintien (2133) pour maintenir les billes (2132);
une rondelle supérieure (2134) agencée au-dessus des billes (2132); et
une rondelle inférieure (2135) agencée sous les billes (2132),
**caractérisé en ce que**
le compresseur hermétique comprend en plus un mécanisme de régulation pour réguler la rondelle inférieure (2135) de sorte qu'une distance de mouvement dans la direction de poussée de la rondelle inférieure (2135) puisse être plus courte qu'un jeu formé entre un diamètre interne de la rondelle inférieure (2135) et un diamètre externe de la partie d'arbre principale (2122a),
le roulement de butée à billes (2131) est agencé entre une face d'extrémité supérieure du palier (2124) et le rotor (2113) fixé à la partie d'arbre principale (2122a),
une deuxième paroi cylindrique (2141) pour entourer la partie extérieure de la rondelle inférieure (2135) est pourvue dans une partie supérieure du palier (2124); et
le mécanisme de régulation est composé de telle manière qu'un jeu entre un diamètre externe de la rondelle inférieure (2135) et un diamètre interne de la deuxième paroi cylindrique (2141) soit plus petit qu'un jeu entre un diamètre interne de la rondelle inférieure (2135) et un diamètre externe de la partie d'arbre principale (2122a).

6. Compresseur hermétique de la revendication 5,
dans lequel le mécanisme de régulation comprend une deuxième partie d'évidement (2241) et une deuxième partie en saillie (2242) qui sont engagées de manière libre l'une avec l'autre et agencées respectivement sur la rondelle inférieure (2235) et la face d'extrémité supérieure du palier (2224); et
où un jeu dans la direction de poussée entre la deuxième partie d'évidement (2241) et la deuxième partie en saillie (2242) est plus petit qu'un jeu entre un diamètre interne de la rondelle inférieure (2235) et un diamètre externe de la partie d'arbre principale (2222a).

7. Compresseur hermétique de la revendication 5,
dans lequel le mécanisme de régulation comprend une deuxième partie incurvée (2341) sur une circonférence externe de la rondelle inférieure (2335); et
où un jeu dans la direction de poussée entre une face circonférentielle interne de la deuxième partie incurvée (2341) et un diamètre externe (J) du palier (2324) est plus petit qu'un jeu entre un diamètre interne (C) de la rondelle inférieure (2335) et un diamètre externe (d) de la partie d'arbre principale (2322a).

8. Compresseur hermétique de la revendication 5,
dans lequel le mécanisme de régulation comprend une deuxième partie en saillie annulaire (2441) agencée à l'intérieur d'une face d'extrémité supérieure du palier (2424); et
où la deuxième partie en saillie annulaire (2441) et une circonférence interne de la rondelle inférieure (2435) sont engagées de manière libre l'une avec l'autre.
